(19) **Europäisches Patentamt**
**European Patent Office**
**Office européen des brevets**

(11) **EP 3 366 925 B1**

(12) # EUROPÄISCHE PATENTSCHRIFT

(45) Veröffentlichungstag und Bekanntmachung des Hinweises auf die Patenterteilung:
**30.03.2022 Patentblatt 2022/13**

(21) Anmeldenummer: **18000143.0**

(22) Anmeldetag: **15.02.2018**

(51) Internationale Patentklassifikation (IPC):
**F04D 15/00** *(2006.01)* **F24D 19/10** *(2006.01)*

(52) Gemeinsame Patentklassifikation (CPC):
**F04D 15/0066; F24D 19/1012;** Y02B 30/70

(54) **VERFAHREN ZUR BETRIEBSEINSTELLUNG EINES PUMPENAGGREGATS SOWIE ANORDNUNG EINES PUMPENAGGREGATS UND EINER ELEKTRONIK ZUR AUSFÜHRUNG DES VERFAHRENS**

METHOD FOR ADJUSTING THE OPERATION OF A PUMP SYSTEM AND ARRANGEMENT OF A PUMP SYSTEM AND ELECTRONICS FOR CARRYING OUT THE METHOD

PROCÉDÉ DE RÉGLAGE FONCTIONNEL D'UN GROUPE MOTOPOMPE AINSI QUE L'AGENCEMENT D'UN GROUPE MOTOPOMPE ET D'UNE ÉLECTRONIQUE DESTINÉ À LA MISE EN OEUVRE DUDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2017 DE 102017001722**

(43) Veröffentlichungstag der Anmeldung:
**29.08.2018 Patentblatt 2018/35**

(73) Patentinhaber: **WILO SE**
**44263 Dortmund (DE)**

(72) Erfinder:
• **Huth, Christian**
**44287 Dortmund (DE)**

• **Knapp, Thomas**
**33803 Steinhagen (DE)**
• **Kettner, Thorsten**
**45711 Datteln (DE)**

(74) Vertreter: **Cohausz Hannig Borkowski Wißgott Patentanwaltskanzlei GbR**
**Schumannstraße 97-99**
**40237 Düsseldorf (DE)**

(56) Entgegenhaltungen:
**EP-A1- 1 323 984       DE-A1- 3 315 828**
**US-A1- 2015 108 230**

**Beschreibung**

Die Erfindung betrifft ein Verfahren zur Betriebseinstellung eines in seiner Leistung regelbaren Pumpenaggregats einer hydraulischen Anlage eines Gebäudes mit einer Anzahl an Verbrauchern, die das Pumpenaggregat mit einer Wärme- oder Kühlleistung versorgt, indem ein Wert einer Einstellgröße vorgegeben wird. Des Weiteren betrifft die Erfindung eine Anordnung eines in seiner Leistung regelbaren Pumpenaggregats für die hydraulische Anlage und einer dem Pumpenaggregat zugeordneten Elektronik, mit der eine Betriebseinstellung des Pumpenaggregats durch Vorgabe eines Vorgabewerts einer Einstellgröße zumindest mittelbar einstellbar ist.

Derartige Pumpenaggregate sind allgemein bekannt, beispielsweise in Gestalt von Heizungspumpen oder Kühlmittelpumpen, die in entsprechenden Heizungs- oder Kühlanlagen oder kombinierten Heiz-/ Kühlanlagen von Gebäuden integriert sind. Ein Beispiel für ein solches Pumpenaggregat in Gestalt einer Heizungspumpe ist beispielsweise in der europäischen Patentanmeldung EP 1 199 530 B1 beschrieben.

Die deutsche Patentanmeldung DE 3315828 A1 offenbart eine Heizungsanlage, die unter Heranziehung der Vorlauftemperatur und/ oder des Wasserdurchflusses Wärme zu Verbrauchern transportiert, wobei jedem Verbraucher eine Einrichtung zur Ermittlung des Wärmebedarfs zugeordnet ist und die Information über den Wärmebedarf jedes Verbrauchers einer zentralen Heizungsregelungseinrichtung zugeführt wird, welche anschließend aus den Bedarfsinformationen der Verbraucher die Höhe des erforderlichen Wärmeangebots ermittelt und aufgrund des höchsten benötigten Wärmebedarfs das Heizleistungsangebot verändert.

US2015/0108230 offenbart die Steuerung einer Pumpe während des Betriebs eines Heiz- oder Kühlsystems in Abhängigkeit der Anzahl an Zonen, die einen Wärme- bzw. Kühlbedarf haben, wobei bei einer Zone eine niedrige Drehzahl und bei zwei oder mehr Zonen eine höhere Drehzahl eingestellt wird.

Die Einstellung der hydraulischen Leistung erfolgt in der Regel durch einen Anwender, welcher sie an die jeweilige Heizungsanlage anpassen muss. Dies geschieht zum einen im Hinblick auf die Forderung, dass die Verbraucher in keinem Betriebszustand unterversorgt werden dürfen, zum anderen im Hinblick darauf, dass die Pumpe energieeffizient läuft, d.h. beispielsweise nicht unnötig gegen geschlossene Ventile fördert. Eine weitere Bedingung kann beispielsweise auch die Forderung nach möglichst geringen Strömungsgeräuschen sein.

Als Einstellgröße zur Einstellung der hydraulischen Leistung wird heutzutage üblicherweise die Drehzahl oder die Förderhöhe verwendet, wobei zum Beispiel im ungeregelten Betrieb eine feste Drehzahl oder im geregelten Betrieb eine Regelkennlinie vorgegeben werden kann, die durch eine konstante Förderhöhe oder eine volumenstromabhängige Förderhöhe gekennzeichnet ist.

Um eine korrekte, situationsadäquate Anpassung der Leistung an die hydraulische Anlage zu erreichen, muss der Anwender die hydraulische Anlage kennen, insbesondere müssen ihm die Rohrnetzeigenschaften wie Länge, Durchmesser, Maximalhöhe der Rohrleitungen etc. bekannt sein. Dies ohne vorliegende Pläne zu ermitteln, ist schwer oder sogar kaum möglich, weil sich das Rohrnetz in der Regel in den Wänden erstreckt und somit nicht sichtbar ist. Letzteres ist jedenfalls dann ein Problem, wenn das Pumpenaggregat nachgerüstet wird, d.h. in Folge des Ersetzens einer Altpumpe in ein bestehendes System integriert werden muss. Aber gerade in diesem Fall liegen aufgrund des Alters des Gebäudes meist keine Pläne vor.

Selbst wenn aber die Auslegungsdaten der Anlage bekannt sind, ist es für eine bedarfsgerechte Einstellung des Pumpenaggregats erforderlich, Berechnungen durchzuführen, die der Anwender häufig scheut. Schließlich ist die Einstellung der Leistung am Pumpenaggregat aufgrund der Vielzahl angebotener Funktionen, beispielsweise verschiedener Regelkurven meist nicht intuitiv und erfordert zudem ein Studium der Betriebsanleitung, insbesondere des Pumpenkennfeldes, was ebenfalls vom Anwender regelmäßig nicht ausreichend beachtet wird. Mittlerweile sind zwar auch Pumpenaggregate bekannt, die eine automatische bedarfsgerechte Einstellung, gegebenenfalls sogar selbsttätig eine Vermessung oder Untersuchung der hydraulischen Anlage durchführen. Eine derartige Funktion ist heutzutage jedoch häufig nur in Premiumprodukten verfügbar und benötigt längere Anlernzeiträume. Nichtsdestotrotz kann auch die Wirkweise einer solchen Automatik-Funktion der Pumpe verbessert werden, wenn dem Pumpenaggregat Informationen über die erforderliche hydraulische Leistung bekannt wären, insbesondere der sogenannte Auslegungspunkt oder die Nennleistung.

Aus den genannten Gründen basiert die Einstellung eines Pumpenaggregats in der Praxis auf ungenauen Schätzwerten. Da die Vermeidung einer Unterversorgung von Verbrauchern im Hinblick auf die Funktionsfähigkeit der hydraulischen Anlage und das Wohlbefinden deren Nutzer Priorität hat, wird die hydraulische Leistung des Pumpenaggregats in der Regel vom Anwender zu hoch eingestellt, so dass die Pumpe nicht energieeffizient läuft und es zu störenden Strömungsgeräuschen kommen kann, die aber in Interesse des Komforts akzeptiert werden.

Es ist daher Aufgabe der vorliegenden Erfindung, ein Verfahren sowie ein entsprechendes Pumpenaggregat bereitzustellen, das eine schnelle und einfache anlagenspezifische Betriebseinstellung am Einbauort ermöglicht.

Diese Aufgabe wird durch ein Verfahren mit den Merkmalen des Anspruchs 1 sowie durch eine Anordnung aus einem Pumpenaggregat und einer Elektronik mit den Merkmalen des Anspruchs 22 gelöst. Vorteilhafte Weiterbildungen der Erfindung sind in den Unteransprüchen angegeben und/oder werden nachfolgend beschrieben.

Gemäß einem Aspekt der Erfindung wird ein Verfahren zur Betriebseinstellung eines in seiner Leistung regelbaren Pumpenaggregats für eine hydraulische Anlage eines Gebäudes mit einer Anzahl an Verbrauchern, die vom Pumpenaggregat mit Wärmeleistung oder Kühlleistung versorgt werden, vorgeschlagen, bei dem die hydraulische Leistung des Pumpenaggregats durch Vorgabe eines Vorgabewerts einer Einstellgröße erfolgt, und diese Einstellgröße die Anzahl der Verbraucher oder eine Anzahl einer hierzu korrespondierenden, zählbaren Einheit, oder die zu beheizende oder kühlende Fläche des Gebäudes ist. Aus dem Vorgabewert der Einstellgröße wird dann von einer dem Pumpenaggregat zugeordneten Elektronik ein Kennwert für die Förderhöhe und/ oder ein Kennwert für den Förderstrom des Pumpenaggregats festgelegt und das Pumpenaggregat in Abhängigkeit des Kennwerts für die Förderhöhe oder des Kennwerts für den Förderstrom oder beider Kennwerte angesteuert.

Gemäß einem weiteren Aspekt betrifft die Erfindung auch ein Pumpenaggregat, dem eine Elektronik zugeordnet ist, welche mit dem Pumpenaggregat in Wirkverbindung steht und mit dieser eine Anordnung bildet, wobei diese Anordnung eingerichtet ist, das erfindungsgemäße Verfahren auszuführen.

Insbesondere betrifft die Erfindung eine Anordnung eines in seiner Leistung regelbaren Pumpenaggregats, insbesondere eines Kreiselpumpenaggregats, für eine hydraulischen Anlage eines Gebäudes mit einer Anzahl an vom Pumpenaggregat mit Wärme- oder Kühlleistung zu versorgenden Verbrauchern, und einer dem Pumpenaggregat zugeordneten Elektronik, mit der eine Betriebseinstellung des Pumpenaggregats durch Vorgabe eines Vorgabewerts einer Einstellgröße zumindest mittelbar einstellbar ist, wobei die Einstellgröße die Anzahl der Verbraucher oder eine Anzahl einer hierzu korrespondierenden zählbaren Einheit, oder die zu beheizende oder kühlende Fläche des Gebäudes ist, und die Anordnung eingerichtet ist, das erfindungsgemäße Verfahren auszuführen

Der Kern der Erfindung besteht somit darin, die Leistung des Pumpenaggregats anhand einer Größe einzustellen bzw. einstellbar zu machen, die der Fachmann schnell und einfach, insbesondere ohne spezielle Berechnungen oder Vorkenntnisse der hydraulischen Anlage sowie ohne besondere Kenntnisse über den Inbetriebnahmeprozess und/ oder das Kennlinienfeld des Pumpenaggregats ermitteln kann. Diese Größe wird nachfolgend Einstellgröße genannt.

Gemäß einer Ausführungsvariante kann die Einstellgröße die Anzahl der Verbraucher sein, die das Pumpenaggregat zu versorgen hat. Der Anwender muss folglich nur die Verbraucher im Gebäude zählen und stellt die so ermittelte Anzahl anschließend an der Elektronik ein. Die Verbraucheranzahl ist somit eine die herkömmliche Drehzahlvorgabe oder Förderhöhenvorgabe substituierende Größe. Ferne kann der Fachmann unter der Verbraucheranzahl unmittelbar eine bestimmte Vorstellung verbinden. Bei den Verbrauchern handelt es sich zum Beispiel um Heizkörper einer Zentralheizung, auch Radiatoren genannt. Hier ist die hydraulische Anlage dann beispielsweise eine Zentralheizungsanlage und das Pumpenaggregat eine Heizungspumpe. Bei Kälteanlagen kann die Anzahl der Verbraucher beispielsweise die Anzahl der von dem Pumpenaggregat zu versorgenden Kälteregister sein.

Vor dem Hintergrund der erfindungsgemäßen Idee, die Verbraucheranzahl als Einstellgröße zu verwenden, ist dem Fachmann ohne Weiteres klar, dass anstelle der Verbraucheranzahl auch eine zu dieser Größe korrespondierende, zählbare Einheit zur Einstellung des Pumpenaggregats verwendet werden kann. Eine solche korrespondierende Einheit ist beispielsweise die Anzahl der zu beheizenden oder zu kühlenden Räume des Gebäudes. Auch diese Anzahl kann leicht und schnell gezählt werden. Eine andere zur Verbraucheranzahl korrespondierende Größe ist die Anzahl an Stellventilen, die den Verbrauchern zugeordnet sind. In der Regel besitzt jeder Verbraucher ein ihm zugeordnetes Stellglied, wie beispielsweise ein Thermostatventil oder einen elektrothermischen Stellmotor, das/ der den Volumenstrom zu einem jeweiligen Verbraucher oder einer Gruppe von Verbrauchern einstellt. Auch diese Ventilanzahl kann leicht und schnell gezählt werden, so dass dem Fachmann auch in der Ventilanzahl eine sinnvolle Substitutionsgröße gegenüber der Drehzahl oder der Förderhöhe an die Hand gegeben ist.

Bezüglich der Anzahl der Räume ist zu beachten, dass meist in jedem Raum eines Gebäudes auch ein Heizkörper angeordnet ist. Zwar kann es sein, dass einzelne Räume keinen Verbraucher aufweisen, gleichwohl weisen gegebenenfalls andere Räume wiederrum zwei Verbraucher auf. Somit kann es beim Zählen zu einer gewissen Unschärfe kommen, die jedoch mit zunehmender Größe des Gebäudes beziehungsweise mit steigender Anzahl an Verbrauchern und Räumen abnimmt, mithin eine mit der Unschärfe verbundene Ungenauigkeit abnimmt, so dass im Mittel betrachtet, die Vorgabe der Raumanzahl zu einer Leistungseinstellung führt, die nur unwesentlich von der Leistungseinstellung bei Vorgabe der Verbraucheranzahl abweicht.

Sind die Verbraucher beispielsweise Heizkreise einer Fußbodenheizung oder Kühldecken einer Zentralkühlungsanlage, ist es sinnvoll, anstelle der Anzahl dieser Verbraucher die von diesen Verbrauchern zu versorgende Gesamtfläche des Gebäudes als Einstellgröße zu verwenden. Gleichwohl ist aber auch im Falle einer Radiatorenheizung, d.h. einer Zentralheizung mit Heizkörpern, die von diesen zu beheizende oder kühlende Gesamtfläche eine mögliche Eintstellgröße im Sinne der Erfindung.

Die Gesamtfläche entspricht hier beispielsweise der Grundfläche, über die sich die Heizkreise bzw. Kühldecken erstrecken, d.h. beispielsweise die Quadratmeterfläche der beheizten oder gekühlten Fläche. Im einfachsten Fall kann auch die Anzahl der bewohnten Quadratmeter des Gebäudes als Größe der zu versorgenden Gesamtfläche verwendet werden. Zwar kann auch dies zu einer gewissen Unschärfe führen, da nicht jeder Quadratmeter des Gebäudes beheizt oder gekühlt wird, wie beispielsweise ein Flur. Jedoch fällt auch dies umso weniger ins Gewicht, je größer die Anlage bzw. das Gebäude ist.

Letztendlich geht es also bei der erfindungsgemäß vorzugebenden Einstellgröße um eine solche Größe, die durch Inaugenscheinnahme schnell und einfach vom Anwender erfassbar ist und eine Aussage über die Größe und/ oder Erstreckung der hydraulischen Anlage bzw. über die notwendige hydraulische Leistung des Pumpenaggregats ermöglicht, die es im Auslegungs- bzw. Nennfall zu fördern hat. Eine solche Einstellgröße ist mit der Verbraucheranzahl, einer hierzu korrespondierenden Einheit wie der Raumanzahl, und mit der zu versorgenden Gesamtfläche der Anlage gegeben.

Um zu ermöglichen, dass das Pumpenaggregat oder das erfindungsgemäße Verfahren für ein breites Anlagenspektrum einsetzbar ist, d.h. sowohl für die Verwendung in kleineren Anlagen/ Gebäuden, als auch in größeren Anlagen/ Gebäuden mit einer Vielzahl an Verbrauchern/ Räumen oder für großflächige Heiz- oder Kühlzonen geeignet ist, ist es vorteilhaft, anstelle der Vorgabe eines einzigen diskreten Vorgabewerts der Einstellgröße eine einen Bereich bildende Gruppe von Vorgabewerte vorzugeben.

Die Verbraucheranzahl, die Anzahl der hierzu korrespondierenden Einheiten oder die zu beheizende/ kühlende Gesamtfläche ist dann durch einen solchen Wertebereich quantifiziert. Die Einstellbarkeit des Pumpenaggregats wird dadurch erleichtert. So genügt es beispielsweise bei einer Eignung des Pumpenaggregats für Anlagen mit 5 bis 100 Verbrauchern, nicht jede dieser 96 verschiedenen Verbraucheranzahlen einstellbar zu machen, sondern die Anzahlen mehrerer Verbraucher zu Bereichen zusammenzufassen. So können rein beispielhaft zehn Bereiche, z.B. 5-14, 15-24, 25-34 ... 95-100 Verbraucher entsprechend zu jeweils einer Gruppe bzw. einem Bereich zusammengefasst werden. Bei der Einstellung des Pumpenaggregats wird somit kein diskreter Vorgabewert, sondern ein Wertebereich mehrerer Vorgabewerte der Einstellgröße vorgegeben. Aus dem jeweiligen Bereich kann dann ein für diesen Bereich repräsentativer Wert, beispielsweise ein Mittelwert des entsprechenden Bereichs oder der Maximalwert als Vorgabewert verwendet werden.

Es ist ferner nicht erforderlich, dass die Bereiche alle dieselbe Größe aufweisen. Vielmehr können sie verschieden groß sein. Besonders vorteilhaft ist es, wenn die Bereiche mit steigender Anzahl oder Fläche größer werden. Dies berücksichtigt die Tatsache, dass große Anlagen auf eine ungenaue Einstellung weniger empfindlich reagieren als kleinere Anlagen, bei denen die Einstellung bzw. Anpassung des Pumpenaggregats an die hydraulische Anlage so gut wie möglich sein sollte. So können die Bereiche bzw. Gruppenzusammenfassungen im Falle der Verbraucheranzahlen beispielsweise wie folgt sein: 1 bis 3, 4 bis 7, 8 bis 12, 13 bis 18, 19 bis 30 usw.

Das erfindungsgemäße Verfahren umfasst somit als ersten Schritt die Vorgabe eines Werts oder Wertebereichs der Einstellgröße, z.B. der Verbraucheranzahl, Raumanzahl, Gesamtfläche etc. durch einen Nutzer, beispielsweise dem Anwender. Aufgrund dieses Werts wird dann in einem zweiten Schritt automatisiert ein Kennwert für die Förderhöhe des Pumpenaggregats oder für dessen Förderstrom oder sogar beides ermittelt. In einem dritten Schritt wird dann das Pumpenaggregat, insbesondere ein dessen Elektromotor steuernder Frequenzumrichter in Abhängigkeit des Kennwerts oder beider Kennwerte angesteuert.

Die Ermittlung des Kennwerts oder der Kennwerte erfolgt in der dem Pumpenaggregat zugeordneten Elektronik. Vorzugsweise kann auch die Vorgabe des Einstellwerts an dieser Elektronik erfolgen. Bei der Elektronik kann es sich um eine Pumpenelektronik handeln, die baulich ein Teil des Pumpenaggregats sein kann. Vorzugsweise übernimmt die Elektronik auch die Steuerung und/ oder Regelung des Pumpenaggregats, beispielsweise indem sie ein Stellsignal an einen Frequenzumrichter gibt, der den Elektromotor des Pumpenaggregats speist.

Gemäß einer alternativen Ausführungsvariante kann die dem Pumpenaggregat zugeordnete Elektronik, an der die Vorgabe des Vorgabewerts der Einstellgröße erfolgt, eine von dem Pumpenaggregat, insbesondere von einer baulich mit diesem verbundenen Pumpenelektronik entfernt angeordnete Elektronik sein. So kann es sich bei dieser externen Elektronik beispielsweise um ein tragbares Endgerät handeln, beispielsweise ein Mobiltelefon, ein Tablet oder einen Laptop. Alternativ kann es sich bei der Elektronik um einen Computer handeln, der fernab des Pumpenaggregats steht, beispielsweise in einer Gebäudeleitzentrale. Auf dem Endgerät oder Computer kann eine entsprechende Software-Applikation laufen, die eine Eingabe des Vorgabewerts der Einstellgröße ermöglicht bzw. erwartet. Die Eingabe kann dann zur Ermittlung des Kennwerts oder der Kennwerte an die Pumpenelektronik übertragen werden, oder alternativ direkt in dem Endgerät oder dem Computer berechnet werden. Im erstgenannten Fall sind somit die Elektronik, an der die Vorgabe der Einstellgröße erfolgt, und die Elektronik, die den Kennwert oder die Kennwerte ermittelt, verschieden. Die externe Elektronik stellt hier nur ein Human-Machine-Interface (HMI) dar. Im zweitgenannten Fall übernimmt die externe Elektronik auch die Ermittlung des Kennwerts oder der Kennwerte. Dieser oder diese können dann an die Pumpenelektronik übermittelt werden. Es ist jedoch auch möglich, dass in der externen Elektronik noch weitere Datenverarbeitungsschritte durchgeführt werden, beispielsweise die Bestimmung einer Regelkennlinie und/ oder eines Grenzwerts für den Betrieb des Pumpenaggregats, wie nachfolgend noch erläutert wird. In diesem Fall kann dann nur die Regelkennlinie und/ oder der Grenzwert an die Pumpenelektronik übermittelt werden. Die externe Elektronik ist somit nicht nur das HMI sondern übernimmt auch Rechenleistung.

Die externe Elektronik, insbesondere das Endgerät oder der Computer, kann über eine Kabel- oder vorzugsweise über eine Funkverbindung mit dem Pumpenaggregat, insbesondere mit der Pumpenelektronik in Wirkverbindung stehen. Die Datenübertragung kann nach einem der üblichen Kommunikationsstandards erfolgen, beispielsweise kabelgebunden über Ethernet, CAN, LON oder Modbus, oder kabellos via Infrarot, Bluetooth, NFC, WLAN oder EnOcean.

Es sei der Vollständigkeit halber erwähnt, dass ein Pumpenaggregat ein Bausatz zusammenwirkender Komponenten darstellt. Diese können baulich und funktional oder nur funktional eine Einheit bilden, d.h. örtlich getrennt voneinander sein. So kann die Pumpenelektronik außen am Gehäuse des Elektromotors montiert sein oder fernab hierzu angeordnet sein. Auch kann der Frequenzumrichter baulich Teil der Pumpenelektronik oder davon getrennt sein.

Gemäß einer Ausführungsvariante kann die Festlegung des Kennwerts für die Förderhöhe durch eine der folgenden Berechnungsvorschriften erfolgen:

$$H_{nenn} = H_{off} + H_V \cdot N_V,$$

$$H_{nenn} = H_{off} + H_R \cdot N_R,$$

oder

$$H_{nenn} = H_{off} + H_F \cdot F,$$

wobei

| | |
|---|---|
| $H_{nenn}$ | der festzulegende Kennwert für die Förderhöhe ist, |
| $H_{off}$ | ein vordefinierter Förderhöhenoffset ist, |
| $H_V$ | ein vordefinierter Förderhöhenparameter ist, der eine Förderhöhe pro Verbraucher ausdrückt, |
| $H_R$ | ein vordefinierter Förderhöhenparameter ist, der eine Förderhöhe pro Einheit, insbesondere pro Raum ausdrückt, |
| $H_F$ | ein vordefinierter Förderhöhenparameter ist, der eine Förderhöhe pro Flächeneinheit, insbesondere pro Quadratmeter Fläche ausdrückt, |
| $N_V$ | die durch den Vorgabewert vorgegebene Anzahl der Verbraucher ist, |
| $N_R$ | die durch den Vorgabewert vorgegebene Anzahl der Einheiten insbesondere der Räume ist, und |
| $F$ | die durch den Vorgabewert vorgegebene Fläche des Gebäudes ist. |

Somit kann erfindungsgemäß die Verbraucheranzahl, Anzahl an Einheiten, z.B. Räumen, oder die zu versorgende Fläche verwendet und in eine anlagenspezifische Nennförderhöhe umgerechnet werden, so dass ein Nutzer keine Förderhöhe mehr selbst ermitteln muss.

Gemäß einer Ausführungsvariante kann zusätzlich oder alternativ die Festlegung des Kennwerts für den Förderstrom durch eine der folgenden Berechnungsvorschriften erfolgen:

$$Q_{nenn} = Q_{off} + Q_V \cdot N_V,$$

$$Q_{nenn} = Q_{off} + Q_R \cdot N_R,$$

oder

$$Q_{nenn} = Q_{off} + Q_F \cdot F,$$

wobei

| | |
|---|---|
| $Q_{nenn}$ | der festzulegende Kennwert für den Förderstrom ist, |
| $Q_{off}$ | ein vordefinierter Förderstromoffset ist, |
| $Q_V$ | ein vordefinierter Förderstromparameter ist, der einen Förderstrom pro Verbraucher ausdrückt, |
| $Q_R$ | ein vordefinierter Förderstromparameter ist, der eine Förderstrom pro Einheit, insbesondere pro Raum ausdrückt, |
| $Q_F$ | ein vordefinierter Förderstromparameter ist, der eine Förderstrom pro Flächeneinheit, insbesondere pro Qua- |

dratmeter Fläche ausdrückt,

Nv     die durch den Vorgabewert vorgegebene Anzahl der Verbraucher ist,

$N_R$     die durch den Vorgabewert vorgegebene Anzahl der Einheiten insbesondere der Räume ist, und

F     die durch den Vorgabewert vorgegebene Fläche des Gebäudes ist.

Somit kann erfindungsgemäß die Verbraucheranzahl, die Anzahl an Einheiten, z.B. Räumen, oder die zu versorgende Fläche verwendet und in einen anlagenspezifischen Nennförderstrom umgerechnet werden, so dass ein Nutzer keinen Förderstrom mehr ermitteln muss.

Aus empirischen Untersuchungen hat sich ergeben, dass die Vordefinition des Förderhöhenoffsets $H_{off}$ geeigneterweise zwischen 30cm und 80cm, bevorzugt etwa 50cm betragen sollte,

Unabhängig davon oder gleichzeitig kann die Vordefinition des Förderstromoffsets Qoff zwischen 0l/h und 500l/h, bevorzugt etwa 200l/h betragen.

Die Vordefinition des Förderhöhenparameters $H_v$ oder $H_R$ oder $H_F$ kann zusätzlich oder alternativ zwischen 2cm und 10cm, bevorzugt etwa 5cm pro Verbraucher oder Einheit, oder zwischen 0,1cm und 0,6cm, bevorzugt etwa 0,3cm pro Quadratmeter Fläche betragen.

Schließlich kann kumulativ oder alternativ die Vordefinition des Förderstromparameters $Q_v$ oder $Q_R$ oder $Q_F$ zwischen 30l/h und 50l/h, bevorzugt etwa 40l/h pro Verbraucher oder Einheit, oder zwischen 1l/h und 8l/h, bevorzugt im Bereich von 3l/h bis 4l/h pro Quadratmeter Fläche betragen.

Wie die beiden Kennwerte für den Betrieb des Pumpenaggregats verwendet werden, kann in verschiedenen Ausführungsvarianten unterschiedlich umgesetzt sein, insbesondere von weiteren Faktoren und/ oder Zielen abhängen, wie dies an sich bekannt und in der deutschen Patentanmeldung 102016004458.6 beschrieben ist. Gemäß einer Ausführungsvariante können die Kennwerte oder zumindest einer der Kennwerte zur Festlegung einer Regelkennlinie verwendet werden. Eine Regelkennlinie kann aus den Kennwerten oder zumindest dem Förderhöhenkennwert berechnet oder alternativ anhand des Förderhöhenkennwerts und/ oder des Förderstromkennwerts aus einer Anzahl, insbesondere einer Mehrzahl hinterlegter Kennlinien ausgewählt werden. Diese Auswahl kann danach getroffen werden, zu welcher der hinterlegten Regelkennlinie ein durch die Kennwerte definierter Betriebspunkt am nächsten liegt.

Gemäß einer anderen Ausführungsvariante können die Kennwerte oder zumindest einer der Kennwerte zur Begrenzung des Betriebspunktes in einer Regelungsart verwendet werden. Gemäß einer dritten Ausführungsvariante kann zumindest einer der Kennwerte, vorzugsweise beide Kennwerte, zur Festlegung einer Regelkennlinie und zumindest einer der Kennwerte, insbesondere derselbe oder der andere Kennwert, vorzugsweise beide Kennwerte, zur Begrenzung des Betriebspunktes in einer Regelungsart verwendet werden.

Als Regelung kann beispielsweise eine an sich bekannte Konstantdruck-Regelung ($\Delta$p-c), eine Proportionaldruckregelung ($\Delta$p-v) oder eine Automatik-Regelung verwendet werden, wie sie seitens der Anmelderin unter der Bezeichnung Dynamic Adapt® eingesetzt wird. In jeder Regelungsart kann zusätzlich eine Betriebsgrenze verwendet werden, beispielsweise eine Begrenzung des Förderstroms (Q-Limit), der Förderhöhe (H-Limit) oder der Drehzahl (n-Limit), wobei auch zwei dieser Größen gemeinsam den Betriebsbereich begrenzen können, z.B. eine Förderhöhen- und Förderstromgrenze oder eine Förderhöhen- und Drehzahlgrenze. Letztere Kombinationen sind beispielsweise im Falle einer Automatik-Regelung sinnvoll. Allgemein sind durch eine Begrenzung des Betriebsbereichs Energieeinsparungen dadurch möglich, dass das Pumpenaggregat nicht in Betriebsbereichen verwendet wird, in denen ein deutlich schlechterer Wirkungsgrad vorliegt.

Die beiden Kennwerte definieren gemeinsam einen Betriebspunkt im Kennfeld des Pumpenaggregats und können zur Festlegung einer Regelungsart und/ oder zur Festlegung einer Betriebsgrenze verwendet werden. Dabei kann auch nur ein Kennwert ausreichen. Dies wird nachfolgend verdeutlicht.

Wie bereits erwähnt, kann die erfindungsgemäße Idee, eine einfach zu ermittelnde Größe zu verwenden und daraus einen Kennwert für die Förderhöhe und/ oder den Förderstrom festzulegen, grundsätzlich sowohl bei einer Radiatorheizung als auch bei einer Flächenheizung oder -kühlung verwendet werden, wobei in beiden Fällen als Einstellgröße gemäß einer Ausführungsvariante die zu beheizende oder kühlende Gesamtfläche F verwendet werden kann. Da durchströmte Radiatoren ein anderes hydraulisches Verhalten aufweisen, als durchströmte Heiz- oder Kühlkreise einer Fußbodenheizung oder Deckenkühlung sollte bekannt sein, welchen Typ Verbraucher die Pumpe zu versorgen hat, so dass der Kennwert für die Förderhöhe und / oder der Kennwert für den Förderstrom mit der richtigen Berechnungsvorschrift festgelegt wird. Die entsprechenden Berechnungsvorschriften können somit der entsprechenden Verwendung bzw. hydraulischen Anlage zugeordnet in der Elektronik hinterlegt sein, so dass sie je nach Bedarf verwendbar sind.

Mit anderen Worten ist es in dem Fall, dass beide Anwendungen (Radiatorheizung und Flächenheizung/-kühlung) in der Elektronik implementiert sind, erforderlich, dass der Elektronik der Anlagentyp (Radiatorheizung oder Flächenheizung/-kühlung) mitgeteilt wird, so dass sie die richtige Berechnungsvorschrift bzw. die entsprechenden Parameter zur Berechnung des Kennwerts für die Förderhöhe und/ oder den Förderstrom auswählen kann. Erst dann kann die Elektronik entscheiden, wie die vorgegebene Fläche in den Förderhöhenkennwert und/ oder den Förderstromkennwert umzurechnen ist.

Um dies zu erreichen, kann die Elektronik vor oder nach der Vorgabe der Fläche als Einstellgröße eine Eingabe erwarten, die angibt, ob die hydraulische Anlage eine Flächenheizung oder Flächenkühlung ist. In Abhängigkeit der Eingabe wird dann der oder ein Kennwert für die Förderhöhe und/ oder der Kennwert für den Förderstrom festgelegt.

Gibt die Eingabe dann an, dass die hydraulische Anlage eine Flächenheizung oder Flächenkühlung ist, kann die Festlegung eines Kennwerts für die Förderhöhe und des Kennwerts für den Förderstrom durch

$$H_{nenn} = H_{const}$$

und

$$Q_{nenn} = Q_{off} + Q_F \cdot F,$$

erfolgen, wobei

| | |
|---|---|
| Hnenn | der festzulegende Kennwert für die Förderhöhe ist, |
| Hconst | eine Konstante im Bereich von 1,0m bis 3m, vorzugsweise etwa 2m ist; |
| Qnenn | der festzulegende Kennwert für den Förderstrom ist, |
| Qoff | ein Förderstromoffset im Bereich von 0 bis 500l/h, vorzugsweise etwa 200l/h ist, |
| $Q_F$ | ein Förderstromparameter im Bereich von 1l/(h·m²) bis 8l/(h·m²), vorzugsweise etwa 4l/(h·m²) ist, und |
| F | die durch den Vorgabewert vorgegebene Fläche des Gebäudes ist. |

Dies bedeutet, dass im Falle einer Flächenheizung oder Flächenkühlung bei der beschriebenen Ausführungsvariante vorteilhafterweise eine konstante Förderhöhe als Förderhöhenkennwert verwendet wird, d.h. ein vom Vorgabewert unabhängiger Kennwert. Demgegenüber wird der Förderstromkennwert aus dem Vorgabewert gemäß der genannten Berechnungsvorschrift $Q_{nenn}=Q_{off}+Q_F\cdot F$ ermittelt.

Im Falle einer Flächenheizung ist es von Vorteil, wenn die hydraulische Anlage auf konstanten Druck bzw. konstante Förderhöhe geregelt wird (Δp-c), da die größten Druckverluste in der Regel in den langen Heiz- oder Kühlschleifen der Heizflächen bzw. Kühlflächen entstehen und alle Heiz- oder Kühlkreise parallel aus einem Vorlaufverteiler gespeist werden, so dass alle Verbraucher bis zum Verteiler eine gemeinsame Zuleitung haben.

Die Verwendung der Kennwerte bei einer Flächenheizung oder Flächenkühlung kann nun derart sein, dass auf die konstante Förderhöhe $H_{const}$ geregelt wird. In diesem Fall ist somit die Regelkennlinie durch diese Förderhöhe definiert. Zusätzlich kann der Förderhöhenkennwert Qnenn als eine Förderstromgrenze für die Regelung verwendet werden (Q-Limit). Alternativ zur Förderstromgrenze kann aus dem Förderhöhenkennwert und dem Förderstromkennwert eine Drehzahlgrenze ermittelt werden, wobei das Pumpenaggregat derart betrieben wird, dass diese Drehzahlgrenze bei der Regelung nicht überschritten wird (n-Limit).

Ist das Ergebnis der Eingabe, dass die hydraulische Anlage keine Flächenheizung oder Flächenkühlung ist, d.h. eine Radiatorheizung ist, kann die Festlegung des Kennwerts für die Förderhöhe und des Kennwerts für den Förderstrom durch:

$$H_{nenn} = H_{off} + H_F \cdot F,$$

$$Q_{nenn} = Q_{off} + Q_F \cdot F,$$

erfolgen, wobei

| | |
|---|---|
| Hnenn | der festzulegende Kennwert für die Förderhöhe ist, |
| $H_{off}$ | ein Förderhöhenoffset im Bereich von 30cm bis 80cm, vorzugsweise etwa 50cm ist, |
| $H_F$ | ein Förderhöhenparameter im Bereich von 0,1cm/ m² bis 0,6cm/ m², vorzugsweise etwa 0,3cm/m² ist, |
| Qnenn | der festzulegende Kennwert für den Förderstrom ist, |
| Qoff | ein Förderstromoffset im Bereich zwischen 0 bis 500l/h, vorzugsweise etwa 100l/h ist, |
| $Q_F$ | ein Förderstromparameter im Bereich zwischen 1l/(h·m²) und 5l/(h·m²), vorzugsweise etwa 3l/(h·m²) ist, und |
| F | die durch den Vorgabewert vorgegebene Fläche des Gebäudes ist. |

Dies bedeutet, dass im Falle einer Radiatorheizung bei der beschriebenen Ausführungsvariante vorteilhafterweise sowohl für den Kennwert der Förderhöhe als auch für den Kennwert der Fördermenge eine Abhängigkeit vom Vorgabewert vorliegt.

Die Verwendung dieser Kennwerte kann hier derart sein, dass aus ihnen eine zum Förderstrom proportionale Förderhöhe festgelegt, d.h. das Pumpenaggregat entlang einer Proportionaldruckkurve geregelt wird. Zusätzlich kann aus zumindest einem der Kennwerte eine Grenze für die Regelung verwendet werden. So kann beispielsweise eine Förderhöhengrenze und/ oder eine Förderstromgrenze verwendet werden. Alternativ kann aus dem Förderhöhenkennwert und dem Förderstromkennwert eine Drehzahlgrenze ermittelt werden, die bei der Regelung nicht überschritten wird.

Betrachtet man die beiden möglichen Ergebnisse der Eingabe gemeinsam, so kann die von der Elektronik bzw. dem Pumpenaggregat zu treffende Entscheidung über die Regelung von der Eingabe abhängig gemacht werden. So kann in einer ersten Ausführungsvariante des erfindungsgemäßen Verfahrens vorgesehen sein, dass das Pumpenaggregat in einer ersten Regelungsart geregelt wird, wenn die Eingabe angibt, dass die hydraulische Anlage keine Flächenheizung oder Flächenkühlung ist, und in einer zweiten Regelungsart geregelt wird, wenn die Eingabe angibt, dass die hydraulische Anlage eine Flächenheizung oder Flächenkühlung ist. Somit muss der Nutzer nicht mehr selbst entscheiden, welche Regelungsart für die vorliegende hydraulische Anlage besser ist.

Die erste Regelungsart kann vorzugsweise eine Proportionaldruckregelung sein. Bei der zweiten Regelungsart kann es sich geeigneterweise um eine Konstantdruckregelung handeln.

Entsprechend kann die Elektronik eingerichtet sein, das Pumpenaggregat in der ersten Regelungsart gemäß einer Proportionaldruck-Kennlinie und in der zweiten Regelungsart gemäß einer Konstantdruck-Kennlinie zu regeln. Wie entsprechende Regelkurven für diese Regelungen festgelegt werden können, wird nachstehend erläutert.

Wie bereits erwähnt, ist es dann, wenn sowohl eine Parametrierung der Anwendung Radiatorheizung als auch der Anwendung Flächenheizung/-kühlung anhand der Fläche als Einstellgröße in der Elektronik implementiert sind, erforderlich, der Elektronik eine Information über den Anlagentyp mitzuteilen, um die Berechnungsvorschrift auszuwählen. Gemäß einer alternativen Ausführungsvariante kann die Elektronik derart eingerichtet sein, dass nur die Anwendung Flächenheizung/-kühlung anhand der Fläche als Einstellgröße parametrierbar ist. Dies bedeutet, dass die Elektronik dann im Falle der Vorgabe der Fläche automatisch davon ausgehen kann, dass es sich bei der hydraulischen Anlage um eine Flächenheizung/-kühlung handelt, so dass sie standardgemäß als Berechnungsvorschrift

$$H_{nenn} = H_{const}$$

und

$$Q_{nenn} = Q_{off} + Q_F \cdot F,$$

zur Bestimmung des oder der Kennwerte verwenden kann. Die Parameterwerte entsprechen dann den zuvor für den Fall Genannten, dass das Ergebnis der Eingabe ist, dass die hydraulische Anlage eine Flächenheizung oder Flächenkühlung ist.

Wird statt der Fläche die Anzahl der Verbraucher oder hierzu korrespondierenden Einheiten verwendet, ist der Elektronik ohnehin bekannt, welche Berechnungsvorschrift zur Bestimmung der Kennwerte zu verwenden ist, nämlich eine der zuvor Genannten, die die Anzahl beinhaltet.

Gemäß einer vorteilhaften Weiterbildung kann mit der Art des vorgegebenen Einstellwerts auch direkt eine bestimmte Regelungsart verknüpft sein. So kann das Pumpenaggregat in einer ersten Regelungsart geregelt werden, wenn als Einstellgröße die Anzahl der Verbraucher oder dazu korrespondierenden Einheiten vorgegeben wird, und in einer zweiten Regelungsart geregelt werden, wenn als Einstellgröße die zu beheizende oder kühlende Fläche vorgegeben wird. Entsprechend kann die Elektronik eingerichtet sein, das Pumpenaggregat bei Vorgabe der Anzahl in der ersten Regelungsart und/ oder bei Vorgabe der Fläche in der zweiten Regelungsart zu betreiben. Die Einstellgröße legt also die Regelungsart fest. Somit reduziert sich die Angabe, die ein Nutzer an der Elektronik vornehmen muss, allein auf den Vorgabewert der Einstellgröße. Nähere Kenntnisse über die hydraulische Anlage und/ oder das Pumpenaggregat sind nicht erforderlich.

Alternativ kann die Elektronik eingerichtet sein, das Pumpenaggregat in einer ersten Regelungsart und einer zweiten Regelungsart zu betreiben, wobei in der ersten Regelungsart die Leistung durch Vorgabe der Anzahl und in der zweiten Regelungsart durch Vorgabe der Fläche einstellbar ist bzw. eingestellt wird. Dies bedeutet, dass hier die Regelungsart festgelegt wird, und abhängig von dieser Festlegung dann der Einstellwert entweder auf die Anzahl oder die Fläche festgelegt ist.

Auch in diesen Ausführungsbeispielen kann die erste Regelungsart vorzugsweise eine Proportionaldruckregelung sein. Bei der zweiten Regelungsart kann es sich geeigneterweise um eine Konstantdruckregelung handeln.

Hinsichtlich der Proportionaldruckregelung kann aus den beiden Kennwerten eine entsprechende Proportionaldruck-Regelkurve festgelegt werden, gemäß welcher das Pumpenaggregat in der ersten Regelungsart geregelt wird. Hierzu werden die beiden Kennwerte als ein möglicher Betriebspunkt B(Hnenn,Qnenn) im Kennfeld des Pumpenaggregats betrachtet.

Gemäß einer Ausführungsvariante kann eine aus mehreren in der Elektronik hinterlegten Proportionaldruck-Regelkurve anhand des Betriebspunktes B($H_{nenn}$,$Q_{nenn}$) ausgewählt werden. Geeigneterweise erfolgt dies danach, zu welcher Regelkurve der Betriebspunkt B(Hnenn,Qnenn) den geringsten Abstand hat. Da die Regelkurve hier eine Gerade ist, kann dies mathematisch auf einfache Weise festgestellt werden, beispielsweise mit dem Verfahren der kleinsten Fehlerquadrate.

Ebendiese Regelkurve mit dem geringsten Abstand wird dann ausgewählt und eingestellt.

Gemäß einer anderen Ausführungsvariante kann die Regelkurve so gewählt sein, dass der Betriebspunkt B(Hnenn,Qnenn) auf ihr liegt. Hierzu ist der mathematische Zusammenhang zwischen der Förderhöhe H und dem Förderstrom Q mit dem vorgegebenen Betriebspunkt auf der Regelkurve in Gestalt einer linearen Abhängigkeit zu betrachten:

$$H(Q) = \frac{H_{nenn} - a \cdot H_0}{Q_{nenn}} Q + a \cdot H_0,$$

gegeben, wobei Hnenn den Förderhöhenkennwert, Qnenn den Förderstromkennwert, Ho die Nullförderhöhe (Förderhöhe bei Förderstrom null) und a ein festlegbarer Parameter ist. H(Q) beschreibt die Proportionaldruck-Regelkurve. Die Nullförderhöhe kann in Abweichung vom üblichen Stand der Technik die Hälfte des Förderhöhenkennwerts betragen. Sie ist vorzugsweise auf diesen Wert standardmäßig voreingestellt, und muss somit nicht explizit vorgegeben werden. Gleichwohl kann die Nullförderhöhe in einer Ausführungsvariante einen veränderbaren Parameter bilden, mittels dem die Steigung der Kurve änderbar ist. Im Falle a = 1 ist die Steigung der Proportionaldruckkurve allein durch Ho bestimmt, da die Kennwerte Hnenn und Qnenn einen auf der Kurve liegenden Betriebspunkt definieren. Der Parameter a erlaubt ebenfalls eine Anpassung der Steigung, insbesondere auch bei festgelegter Nullförderhöhe Ho. Er ist jedoch nur optional und kann daher bevorzugt standardmäßig auf den Wert 1 voreingestellt sein. In diesem Fall ergibt sich für die Proportionaldruck-Regelkurve vereinfacht dargestellt:

$$H(Q) = \frac{1}{2} H_{nenn} \left( \frac{Q}{Q_{nenn}} + 1 \right)$$

Hinsichtlich der Konstantdruckregelung kann allein aus dem Förderhöhenkennwert eine entsprechende Konstantdruck-Regelkurve festgelegt werden, gemäß welcher das Pumpenaggregat in der zweiten Regelungsart geregelt wird.

Gemäß einer Ausführungsvariante kann eine aus mehreren in der Elektronik hinterlegten Konstantdruck-Regelkurve anhand des Förderhöhenkennwerts ausgewählt werden. Geeigneterweise erfolgt dies danach, zu welcher Regelkurve der Förderhöhenkennwert den geringsten Abstand hat. Da die Regelkurve hier eine über den Förderstrom konstante Gerade ist, kann dies mathematisch auf einfache Weise durch Bildung der Differenz zwischen Förderhöhenkennwert und dem die jeweilige Regelkurve definierenden Förderhöhenwert mit anschließender Minimalwertsuche aus allen Differenzen festgestellt werden. Die Regelkurve mit dem geringsten Abstand wird dann ausgewählt und eingestellt.

Gemäß einer vorteilhaften Weiterbildung kann bei der ersten oder zweiten Regelungsart zumindest einer der beiden Kennwerte (Hnenn, Qnenn) einen Grenzwert bilden oder aus zumindest einem der beiden Kennwerten (Hnenn, Qnenn) wenigstens ein Grenzwert ermittelt werden. Das Pumpenaggregat kann dann derart betrieben werden, dass der Grenzwert nicht überschritten wird, beispielsweise indem die Proportionaldruck- oder Konstantdruck-Regelkurve durch den Grenzwert begrenzt wird.

Beispielsweise kann der Kennwert für den Förderstrom einen Volumenstromgrenzwert bilden und somit eine Q-Limit-Funktion realisieren. Auf der entsprechenden Regelkurve wird dann nur bis zum Förderstromkennwert geregelt, jedoch nicht darüber hinaus. Die Regelkurve ist somit förderstrombegrenzt. Alternativ kann der aus den beiden Kennwerten berechnete Grenzwert eine Grenzdrehzahl sein. Erreicht die Drehzahl auf der Regelkurve diese Grenzdrehzahl, wird die Drehzahl somit nicht weiter erhöht. Vielmehr wird bei weiter steigendem Förderstrom die Förderhöhe auf der der Grenzdrehzahl zugeordneten Drehzahlkurve reduziert. Auch hier ist die Regelkurve dann förderstrombegrenzt.

Gemäß einer anderen Ausführungsvariante kann das Pumpenaggregat in einer Regelungsart betreibbar sein, in der die hydraulische Leistung des Pumpenaggregats automatisch an den Bedarf der Anlage angepasst wird. Dies realisiert eine Automatik-Regelung. Die Einstellung dieser Automatik-Regelung kann unabhängig von der Vorgabe des Einstellwerts an der Elektronik erfolgen.

Bei Einstellung dieser Regelungsart kann zumindest einer der beiden Kennwerte einen Grenzwert bilden oder aus zumindest einem der beiden Kennwerten wenigstens ein Grenzwert ermittelt werden, der beim Betrieb des Pumpenaggregats nicht überschritten wird. Somit kann der Kennwert für die Förderhöhe einen Förderhöhengrenzwert bilden. Der Betriebsbereich ist dann bei der Automatik-Regelung zu steigenden Förderhöhen hin im Kennfeld der Pumpe beschränkt. Alternativ oder zusätzlich kann der Förderstromkennwert einen Volumenstromgrenzwert bilden. Der Betriebsbereich ist dann bei der Automatik-Regelung zu steigenden Förderströmen hin im Kennfeld der Pumpe beschränkt. Im Falle beider Grenzwerte ist der Betriebsbereich auf einen rechteckigen Ausschnitt des Pumpenkennfeldes beschränkt, der durch 0....$H_{nenn}$ und 0 ... Qnenn definiert ist.

Alternativ zur Förderstromgrenze kann eine hierzu abgemilderte Grenze durch Definition einer Grenzdrehzahl aus den beiden Kennwerten verwendet werden. Die Grenzdrehzahl ist diejenige Drehzahl, auf deren Drehzahlkurve der durch die beiden Kennwerte gebildete Betriebspunkt liegt, mithin also diejenige Drehzahl, die nötig ist, um den durch die beiden Kennwerte gebildeten Betriebspunkt einzustellen. Erreicht die Drehzahl bei der Automatik-Regelung diese Grenzdrehzahl und erhöht sich der Volumenstrom infolge sich öffnender Ventile weiter, so wird die Drehzahl nicht weiter erhöht, sondern die Förderhöhe entlang der der Grenzdrehzahl zugeordneten Drehzahlkurve reduziert.

Die Grenzdrehzahl kann beispielsweise aus der Gleichung

$$n_{grenz} = -\frac{n_{max}}{2a_0} \cdot a_1 Q_{nenn} + \frac{n_{max}}{a_0}\sqrt{\frac{a_1}{4}Q_{nenn} - a_2 Q_{nenn}^2 + H_{nenn}}$$

ermittelt werden, wobei $n_{grenz}$ die Grenzdrehzahl, $n_{max}$ die Maximaldrehzahl des Pumpenaggregats, Qnenn der Förderstromkennwert, Hnenn der Förderhöhenkennwert und ao, $a_1$, $a_2$ feste Koeffizienten sind, die sich aus der Maximaldrehzahlkurve des Pumpenaggregats ergibt. Gleiches gilt für die Maximaldrehzahl. Die Koeffizienten bzw. Maximaldrehzahl können aus dem vom Pumpenhersteller zum Pumpenaggregat mitgelieferten Datenblatt/ Kenndaten entnommen oder zumindest bestimmt werden.

Sämtliche vorgenannten funktionalen Zusammenhänge können in der Elektronik, insbesondere in der Pumpenelektronik, in Gestalt von Gleichungen oder in Gestalt von Tabellen hinterlegt sein, so dass die Elektronik die entsprechenden Berechnungen bzw. Festlegung durchführen kann.

Ferner können sämtliche vorgenannten Koeffizienten oder Parameter unabhängig voneinander oder gemeinsam in der Elektronik parametrierbar, insbesondere der Förderhöhenoffset $H_{off}$ und/ oder der Förderstromoffset Qoff und/ oder der Förderhöhenparameter $H_v$ und/ oder $H_R$ und/ oder $H_F$ und/ oder der Förderstromparameter $Q_v$ und/ oder $Q_R$ und/ oder $Q_F$, so dass eine Anpassung des Pumpenaggregats an einen bestimmten Verwendungszweck erfolgen kann, insbesondere herstellerseitig oder durch einen erfahrenen Anwender.

Geeigneterweise kann die Elektronik ein drehbares Betätigungsmittel aufweisen, mittels welchem in einem ersten Winkelbereich die Leistung anhand der Anzahl und in einem zweiten Winkelbereich anhand der Fläche vorgebbar ist. Dies stellt eine besonders bedienfreundliche und fehlersichere Betriebseinstellung des Pumpenaggregats sicher. Das Betätigungsmittel ist vorteilhafterweise an der Elektronik angeordnet und von außen zugänglich.

Vorzugsweise ist die Elektronik samt Betätigungsmittel derart ausgebildet, dass durch die Winkelstellung des Betätigungsmittels gleichzeitig sowohl eine der Regelungsarten auswählbar als auch die Leistung vorgebbar ist. So kann auf weitere Bedienelemente neben dem Betätigungsmittel zur Einstellung der hydraulischen Leistung und Auswahl des Betriebsmodus verzichtet werden. Die Betriebseinstellung des Pumpenaggregats ist somit besonders einfach. Durch ein derart ausgestaltetes Betätigungsmittel kommen ferner Fehleinstellungen zwangsläufig nicht vor, da die einzelnen Betriebsmodi und Leistungen nur alternativ ausgewählt werden können.

Darüber hinaus ist eine einzige Einstellungsgeste erforderlich, um das Pumpenaggregat betriebsbereit zu setzen, was für den Anwender bei der Inbetriebnahme des Pumpenaggregates selbstredend von großem Nutzen ist. Er muss nicht in irgendwelchen Menüs herumspringen, um den Betriebsmodus, insbesondere die Regelungsart einerseits, und innerhalb dieses Betriebsmodus dann die hydraulische Leistung andererseits einzustellen.

Idealerweise kann jeder Winkeleinstellung des Betätigungsmittels eine bestimmte Anzahl der Verbraucher oder Einheiten oder eine Maßangabe für die zu heizenden oder kühlende Fläche, oder ein bestimmter Bereich mit Anzahlen oder Flächenmaßen zugeordnet sein. Somit erfolgt die Vorgabe des Vorgabewerts auf einfache Weise über die Winkelstellung des Betätigungsmittels.

Ist das Pumpenaggregat für einen besonders großen Einsatzbereich ausgelegt, so dass es beispielsweise sowohl eine geringe Anzahl als auch eine hohe Anzahl Verbraucher, beispielsweise hundert oder mehr versorgen kann, ist es sinnvoll, wenn diese Zuordnung über den entsprechenden Winkelbereich nichtlinear ist. Vorzugsweise kann im unteren Einstellbereich eines Winkelbereichs eine höhere Auflösung (Anzahl oder Fläche pro Winkeleinheit) für den Vorgabewert vorliegen als im oberen Bereich, da hier die notwendige Genauigkeit für die Betriebseinstellung des Pumpenaggregats mit zunehmender Anlagengröße abnimmt. So macht es bei kleineren Anlagen einen deutlichen Unterschied, ob der Vorgabewert 5 oder 10 Verbraucher angibt, jedoch ist dieser Unterschied von 5 Verbrauchern bei großen Anlagen weniger einflussreich. Ob der Vorgabewert 90 oder 95 Verbraucher angibt, ist hier also weniger bedeutsam. So kann beispielsweise die Zuordnung von Vorgabewert und Winkelstellung derart sein, dass im unteren Einstellbereich eines Winkelbereichs eine Auflösung von einem Verbraucher pro Grad oder $10m^2$ pro Grad und im oberen Bereich eine Auflösung von fünf Verbrauchern pro Grad oder $50m^2$ pro Grad vorliegt.

Bei dem Betätigungsmittel kann es sich beispielsweise um einen Drehschalter, ein Potentiometer oder einen Impulsgeber handeln. Bei einem Drehschalter besteht der Vorteil, dass diskrete Rastpositionen auswählbar sind, so dass eine konkrete, einer Rastposition zugeordnete Anzahl vorgegeben werden kann. da die Anzahl diskret, d.h. ganzzahlig ist. Für die Einstellung der Leistung durch Vorgabe der zu beheizenden oder kühlenden Fläche ist es jedoch von Vorteil, einen kontinuierlichen Einstellbereich, d.h. ein Betätigungsmittel ohne diskrete Rastpositionen zu haben, so dass insbesondere auch beliebige Zwischenstellungen durch das Betätigungsmittel angewählt werden können. Dies ist beispielsweise durch die Verwendung eines Potentiometers oder eines Impulsgebers möglich.

Ein Potentiometer hat den Vorteil, dass es einen durch jeweilige Endanschläge begrenzten Drehwinkelbereich besitzt. Hierdurch kann idealerweise ein definiertes haptisch wahrnehmbares Minimum und ein Maximum für die Leistungseinstellung am Pumpenaggregat ausgewiesen werden. Dies erleichtert dem Fachmann die Einstellung der Leistung, da er aufgrund des relativen Bezugs einer gewünschten, einzustellenden Gesamtfläche oder auch einer Anzahl zum einstellbaren Minimum und Maximum unmittelbar abschätzen kann, wie die Drehwinkelstellung des Betätigungsmittels relativ zu den beiden Endanschlägen sein muss.

Ein Impulsgeber hat den Vorteil, dass er endanschlagfrei ist, d.h. unendlich gedreht werden kann. Eine entsprechende Begrenzung eines Einstellbereichs kann dann softwaretechnisch implementiert sein. Ein Impulsgeber ermöglicht eine feinere Einstellung, für die der Anwender vorzugsweise über eine Anzeige, vorzugsweise ein Display, ein Feedback zum eingestellten Wert erhalten kann. Er eignet sich deshalb insbesondere dann, wenn eine Visualisierung des aktuell eingestellten Werts erfolgen soll. Dies kann beispielsweise durch eine Anzeige in Gestalt einer LED-Segmentanzeige oder eines Displays erfolgen.

Um die Eingabe am Betätigungselement besonders einfach zu gestalten, kann jedem Winkelbereich eine radial neben dem Betätigungsmittel angeordnete, sich entlang seines Umfangs erstreckende Skala oder eine Anordnung von Symbolen oder Markierungen zugeordnet sein, die verschiedene Anzahlen und/ oder Flächengrößen repräsentieren. Die Skala oder Skalen kann/ können die verschiedenen Anzahlen respektive Flächenmaßangaben in Klartext darstellen.

Ist das Pumpenaggregat eingerichtet, nur die erste und zweite Regelungsart bereitzustellen, so genügt jeweils ein Winkelbereich zur Einstellung der Leistung in der entsprechenden Regelungsart, mithin also zwei Winkelbereiche, so dass auch zwei Skalen genügen bzw. vorhanden sein können. So kann sich jede dieser Skala von einem Anfangspunkt des entsprechenden Winkelbereichs zu einem Endpunkt erstrecken. Umfasst das Pumpenaggregat die Einstellung eines weiteren Betriebsmodus, beispielsweise einen Stellerbetrieb mit konstanter Drehzahlvorgabe, kann für diese Drehzahlvorgabe ein weiterer Winkelbereich, mithin auch eine weitere Skala für diesen Winkelbereich vorhanden sein, der die Einstellung der Leistung anhand der Drehzahlvorgabe erleichtert.

Eine Skala kann beispielsweise Wertstriche und/ oder Zahlenwerte für die Einstellung der Anzahl und/oder Fläche umfassen. Dabei genügt es, wenn nicht jede einstellbare Anzahl oder Fläche zahlenmäßig ausgewiesen ist, sondern lediglich Stützzahlen, wie beispielsweise 10, 20 oder 30 im Falle der Anzahl oder $90m^2$, $130m^2$ und $190m^2$ im Falle einer Fläche, ausgewiesen sind. Von Vorteil ist es auch, wenn Wertstriche verwendet werden, um eine genauere Einstellung von Zwischenwerten zu erreichen.

Alternativ oder in Ergänzung einer Skala kann entlang des Umfangs des Betätigungsmittels auch eine Anzahl von Markierungen oder Symbolen angeordnet sein, die die verschiedenen Zahlenwerte repräsentieren. Zur Veranschaulichung einer in eine bestimmte Drehrichtung des Betätigungsmittels steigende Leistung kann beispielsweise die Größe eines Symbols verwendet werden.

Als Symbol kann beispielsweise ein kleines Häuschen verwendet werden oder ein Punkt, das bzw. der in Bezug zu einer niedrigen Einstellung der Leistung, beispielsweise für 10 Verbraucher oder einer Fläche von $90m^2$ vergleichsweise klein ist, für eine mittlere Einstellung, beispielsweise für 20 Verbraucher oder für eine Fläche von $130m^2$, mittelgroß ist, und für eine hohe Leistungseinstellung, beispielsweise für 30 Verbraucher oder einer Fläche von $190m^2$, relativ groß ist. Die angegebene Größe "klein, mittel, groß" bezieht sich hier auf die Größe der Symbole untereinander und hat damit relativen Bezug.

Durch die Verwendung der Markierungen oder Symbole erkennt der Fachmann unmittelbar für jeden der Betriebsmodi, in welche Richtung das Betätigungsmittel zu drehen ist, um die Leistung zu erhöhen oder zu reduzieren. Es ist selbstverständlich, dass viele verschiedene Symbole für eine derartige Veranschaulichung verwendet werden können. Beispielsweise können hierfür auch in ihrer Breite mit steigender Leistung dicker werdende Linien oder Pfeile eingesetzt werden.

Wird anstelle einer Skala mit numerischen Werten für die Anzahl der Verbraucher oder zu beheizende/ kühlende Gesamtfläche eine Markierung oder Symbolik verwendet, ist es erforderlich, die Bedeutung der Symbole dem Anwender klarzumachen. Dies erfolgt geeigneterweise über einen Informationsträger.

Ein weiterer Aspekt der Erfindung betrifft somit ein Set bestehend aus einer erfindungsgemäßen Anordnung und einem Informationsträger, wobei der Informationsträger eine Tabelle umfasst, insbesondere mit dieser bedruckt ist, die eine Zuordnung der Symbole oder Markierungen zu der jeweiligen Anzahl und/ oder Fläche umfasst. Der Informationsträger kann beispielsweise eine Bedienungsanleitung sein, die einem Pumpenaggregat regelmäßig beigefügt ist. Alternativ kann die Verpackung des Pumpenaggregats den Informationsträger bilden, wobei die Tabelle auf diese Verpackung gedruckt ist. Ein Nutzer kann somit schnell und leicht anhand der Tabelle und der von ihm ermittelten Anzahl an Verbrauchern/Einheiten oder Fläche ermitteln, auf welches Symbol oder welche Markierung das Betätigungsmittel gestellt werden sollte.

Um die Varianten der Betriebseinstellung zu erweitern und damit den Kundennutzen zu erhöhen, kann die Anordnung gemäß einer Ausführungsvariante eine direkte Vorgabe einer konstanten oder förderstromabhängigen Förderhöhe ermöglichen. So kann ein Nutzer direkt eine Konstantdruck-Regelkurve oder eine Proportionaldruck-Regelkurve einstellen, wie er dies von den Pumpenaggregaten nach dem Stand der Technik hinlänglich kennt.

Von besonderem Vorteil ist dabei, wenn die Elektronik eine Umschalteinrichtung aufweist, mittels welcher zur Einstellung der Leistung zwischen der Vorgabe der Anzahl und einer direkten Vorgabe einer förderstromabhängigen Förderhöhe umgeschaltet werden kann. Zusätzlich oder alternativ kann die Umschalteinrichtung ermöglichen, dass zwischen der Vorgabe der Fläche und einer direkten Vorgabe einer konstanten Förderhöhe umgeschaltet werden kann. Die Umschalteinrichtung ermöglicht somit einen direkten Vergleich der neuen, erfindungsgemäßen Betriebsmodi mit den herkömmlichen Betriebsmodi. Ferner ermöglicht die Umschalteinrichtung, dass kein zusätzliches Eingabemittel an der Elektronik für die direkte Vorgabe der konstanten oder förderstromabhängigen Förderhöhe. Vielmehr kann das bereits vorhandene drehbare Betätigungsmittel hierzu verwendet werden, wobei dann mittels der Umschalteinrichtung eingestellt werden kann, ob eine bestimmte Stellung des Betätigungsmittels die Anzahl der Verbraucher/ Einheiten oder eine förderstromabhängigen Förderhöhe einerseits, oder die zu beheizende/ kühlende Fläche oder eine konstante Förderhöhe andererseits angibt.

Die Umschalteinrichtung kann zum Teil in Hardware, zum Teil in Software realisiert ·sein. So kann sie ein Betätigungsmittel, beispielsweise einen Druckknopf umfassen, mittels welchem die Umschaltung manuell ausgelöst werden kann. Zudem kann diese Auslösung bewirken, dass die Elektronik die vorgegebene Förderhöhe zur Betriebseinstellung verwendet, anstelle den/ die Kennwerte zu ermitteln und zu verwenden.

Von weiterem Vorteil ist es, wenn die Elektronik ferner eingerichtet ist, das Pumpenaggregat alternativ zur ersten und zweiten Regelungsart in einem Betriebsmodus zu betreiben, in dem die Leistung durch Vorgabe einer konstanten Drehzahl einstellbar ist. Im Gegensatz zur ersten und zweiten Regelungsart ist dieser Betriebsmodus ein solcher, bei dem das Pumpenaggregat ungeregelt läuft. Diese vorteilhafte Weiterbildung trägt dem Umstand Rechnung, dass es trotz energieeffizienter Regelungen bei Pumpenaggregaten gewünscht ist, einen ungeregelten Betrieb zu haben. Rein beispielhaft sei hier eine Anwendung genannt, in der das Pumpenaggregat lediglich zur Druckerhöhung bzw. Überwindung von Rohrleitungsdistanzen dient, was bei sogenannten Zubringerpumpen oder Speicherladepumpen der Fall ist. Die Erweiterung der beiden Regelungsarten durch den ungeregelten Betriebsmodus erweitert somit das Anwendungsspektrum des erfindungsgemäßen Pumpenaggregats.

Vorzugsweise kann zusätzlich zum ersten und zweiten Winkelbereich die Einstellung des Betätigungsmittels innerhalb eines dritten Winkelbereichs erfolgen, in welchem die konstante Drehzahl vorgebbar sein bzw. vorgegeben werden kann.

Weitere Merkmale und Vorteile der erfindungsgemäßen Heizungspumpe sowie des entsprechenden Verfahrens zu deren Einstellung können der nachfolgenden Erläuterung von Ausführungsbeispielen entnommen werden. Es zeigen:

Figur 1: eine beispielhafte Darstellung eines erfindungsgemäßen Heizungspumpenaggregats
Figur 2: schematische Darstellung eines Bedienfeldes des Heizungspumpenaggregats
Figur 3: Zuordnungstabelle
Figur 4a-c: unterschiedliche Eingabevarianten
Figur 5: HQ-Diagramm mit Proportionaldruckkurven
Figur 6: HQ-Diagramm mit Konstantdruckkurven

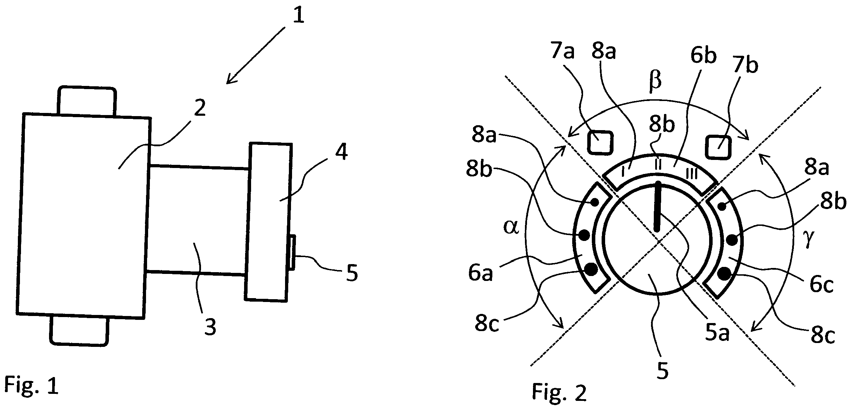

Figur 1 zeigt ein Pumpenaggregat 1 für eine Zentralheizungsanlage eines Gebäudes, die eine Anzahl von Verbrauchern umfasst. Die Verbraucher sind zum Beispiel Heizkörper oder Heizflächen einer Fußboden- oder Deckenheizung. Das Pumpenaggregat 1 besteht aus einer Pumpeneinheit 2, einem Elektromotor 3, der die Pumpeneinheit 2 antreibt, sowie einer Pumpenelektronik 4 zur Regelung des Pumpenaggregats 1. Die Pumpenelektronik 4 umfasst einen Frequenzumrichter, mittels welchem der Elektromotor 3 bestromt, insbesondere gesteuert wird, um eine bestimmte Drehzahl einzustellen, so dass das Heizungspumpenaggregat 1 letztendlich in seiner Drehzahl und damit in seiner Leistung einstellbar ist.

Die Pumpeneinheit 2 umfasst ein Pumpengehäuse, in welchem ein Laufrad drehbar gelagert ist, und welches drehfest mit einer Welle des Elektromotors 3 verbunden ist. Das Laufrad ist ein solches radialer Bauart, so dass das Pumpenaggregat 1 eine Kreiselpumpe bildet. In der Anwendung ist sie eine Umwälzpumpe.

Bei dem Elektromotor 1 kann es sich beispielsweise um einen elektronisch kommutierten Synchronmotor mit einem permanentmagnetischen Rotor handeln. Es sind jedoch beliebige andere Motortypen möglich.

Die Pumpenelektronik 4 ist an eine axiale Stirnseite des Elektromotors 3 an das Statorgehäuse angesetzt und umfasst ein Elektronikgehäuse, das die eigentlichen elektrischen und elektronischen Bauteile der Pumpenelektronik 4 aufnimmt, insbesondere auch den Frequenzumrichter. Die dem Elektromotor 3 abgewandte Vorderseite des Elektronikgehäuses weist ein Bedienfeld mit Anzeige- und Bedienelementen auf, um bestimmte Einstellungen am Pumpenaggregat 1 vorzunehmen und abzulesen zu können. Für Eingaben ist ein drehbares Betätigungsmittel 5 in der Art eines Drehknopfes vorhanden, mittels welchem an der Pumpenelektronik 4 die hydraulische Leistung des Pumpenaggregats 1 eingestellt werden kann.

Die Einstellung der hydraulischen Leistung erfolgt hier anhand einer Einstellgröße, die entweder die Anzahl der Verbraucher Nv oder die zu beheizende Fläche F des Gebäudes ist und durch einen entsprechenden Vorgabewert mittels des Drehknopfs 5 ausgewählt und eingestellt wird. Aus dem Vorgabewert der Einstellgröße wird dann von der dem Pumpenaggregat 1 zugeordneten Elektronik 4 ein Kennwert $H_{nenn}$ für die Förderhöhe H und/ oder ein Kennwert Qnenn für den Förderstrom Q des Pumpenaggregats festgelegt und das Pumpenaggregat 1 in Abhängigkeit dieses Kennwerts Qnenn, Hnenn oder dieser beiden Kennwerte Qnenn, Hnenn angesteuert.

Die Einstellung der Leistung erfolgt also entweder durch Vorgabe der Anzahl der Verbraucher oder durch Vorgabe einer bestimmten Heizungsgesamtfläche aller Verbraucher. Hierzu ist der Drehknopf 5 lediglich in eine bestimmte Winkelstellung zu drehen, die einer entsprechenden Verbraucheranzahl oder Heizungsgesamtfläche zugeordnet ist, wie nachfolgend erläutert wird.

In der Pumpenelektronik sind drei Betriebsmodi der Heizungspumpe 1 hinterlegt, zwischen denen mit Hilfe des Drehknopfs 5 ausgewählt werden kann. Gleichzeitig wird durch den Drehknopf 5 anhand des Vorgabewerts die hydraulische Leistung der Pumpe 1 eingestellt, so dass die gesamte Betriebseinstellung des Heizungspumpenaggregats 1 über den einen Drehknopf 5 erfolgt.

Die Pumpenelektronik 4 ist dazu eingerichtet, das Pumpenaggregat 1 wahlweise in einer ersten oder einer zweiten Regelungsart zu regeln, oder in einem weiteren Betriebsmodus zu betreiben. In der ersten Regelungsart 7a ist die Leistung durch Vorgabe der Anzahl 9 an Verbraucher, in der zweiten Regelungsart 7b durch Vorgabe der zu beheizenden Gesamtfläche 10 und im weiteren Betriebsmodus durch Vorgabe einer konstanten Drehzahl einstellbar.

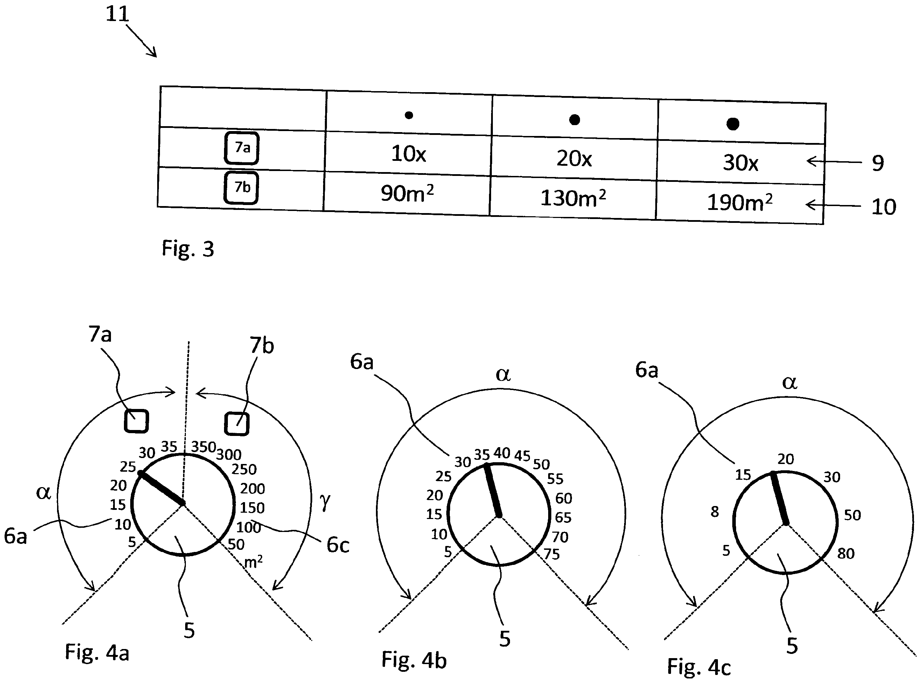

In der ersten Regelungsart 7a wird das Pumpenaggregat 1 gemäß einer Proportionaldruck-Kennlinie R geregelt. Dabei wird der Differenzdruck (die Förderhöhe) zwischen Saugseite und Druckseite der Pumpeneinheit 2 gemäß einer linearen Abhängigkeit vom Förderstrom geregelt. Die erste Regelungsart kann auch als Radiatorbetrieb verstanden werden. Durch eine Winkeleinstellung des Betätigungsmittels 5 in dieser ersten Regelungsart 7a, d.h. durch Vorgabe einer Verbraucheranzahl, wird eine Proportionaldruck-Kennlinie R anhand der ermittelten Kennwerte für die Förderhöhe und den Förderstrom ermittelt und für die Regelung eingestellt, siehe auch Fig. 4.

In der zweiten Regelungsart 7b wird das Pumpenaggregat gemäß einer Konstantdruck-Kennlinie geregelt Hierbei wird der Differenzdruck (Förderhöhe) zwischen der Saugseite und der Druckseite über den Volumenstrom konstant gehalten. Diese zweite Regelungsart 7b eignet sich vor allem für Fußbodenheizungen mit entsprechenden Heizflächen, wobei die Gesamtheit der Heizflächen in Quadratmetern dem Pumpenaggregat 1 erfindungsgemäß vorgegeben wird bzw. werden kann.

Die zweite Regelungsart 7b kann somit als Fußbodenheizungsbetrieb bezeichnet werden. Durch eine Winkeleinstellung des Betätigungsmittels 5 in diesem zweiten Betriebsmodus 7b, d.h. durch Vorgabe einer zu beheizenden Gesamtfläche wird eine Konstantdruck-Kennlinie anhand des ermittelten Förderhöhenkennwerts für die Regelung eingestellt.

Der weitere Betriebsmodus ist ein ungeregelter Betrieb, in dem die Drehzahl unabhängig vom Volumenstrom oder vom Förderdruck konstant gehalten wird.

Die Einstellbarkeit des Heizungspumpenaggregats 1 mit Hilfe des Betätigungsmittels 5 wird nunmehr anhand von Figur 2 erläutert. Dabei werden die erste und zweite Regelungsart als ein erster und zweiter Betriebsmodus verstanden, wobei der weitere Betriebsmodus dann einen dritten Betriebsmodus bildet.

Jedem der drei Betriebsmodi ist ein eigener Einstellbereich 6a, 6b, 6c zugeordnet, der durch einen jeweiligen Winkelbereich $\alpha$, $\beta$, $\gamma$ definiert ist und innerhalb dem die Einstellung der Leistung erfolgen kann. Rein beispielhaft sind in Figur 2 für jeden der Winkelbereiche $\alpha$, $\beta$, $\gamma$ jeweils drei verschiedene, diskrete Leistungen 8a, 8b, 8c ausgewiesen, die durch entsprechende Symbole gebildet sind, die radial neben dem Betätigungsmittel 5 entlang seines Umfangs angeordnet sind.

Das Betätigungsmittel 5 ist hier als Potentiometer mit Drehknopf ausgeführt und kann über einen Gesamtwinkelbereich von beispielhaft 270° kontinuierlich gedreht werden, so dass jede beliebige Winkelstellung innerhalb des Gesamtwinkelbereichs möglich ist. Die drei Winkelbereiche $\alpha$, $\beta$, $\gamma$ sind in dieser Ausführungsvariante gleich groß ausgebildet und umfassen somit jeweils etwa 90°.

Durch die Einstellung des Betätigungsmittels 5 innerhalb eines ersten Winkelbereichs α wird die Anzahl 9, vgl. Fig. 3, der Verbraucher vorgegeben. Diesem ersten Winkelbereich α ist der erste Betriebsmodus 7a zugeordnet, so dass im Falle der Vorgabe der Anzahl 9 der Verbraucher auch sogleich dieser erste Betriebsmodus 7a ausgewählt ist. Eine entsprechende Grafik für diesen ersten Betriebsmodus 7a ist linksseits der senkrechten Mittellinie des Betätigungsmittels 5 hier beispielhaft in Gestalt eines quadratischen Icons vorhanden.

Durch Einstellen des Betätigungsmittels 5 innerhalb eines zweiten Winkelbereichs γ wird die Gesamtheizfläche 10, vgl. Fig. 3, aller Verbraucher vorgegeben. Dem zweiten Winkelbereich γ ist der zweite Betriebsmodus 7b zugeordnet, gemäß dem das Pumpenaggregat entlang einer Konstantdruck-Kennlinie geregelt wird. Auch hier ist eine entsprechende Grafik in Gestalt eines quadratischen Icons auf dem Bedienfeld der Pumpenelektronik 4 vorhanden, welches den zweiten Betriebsmodus 7b andeutet. Diese Grafik ist rechtsseits der senkrechten Mittellinie des Betätigungsmittels 5 angeordnet. Der erste und zweite Winkelbereich α, γ liegen sich bezogen auf den Mittelpunkt des Betätigungsmittels 5 hier beispielhaft symmetrisch gegenüber.

Durch Einstellen des Betätigungsmittels 5 innerhalb des dritten Winkelbereichs β wird eine konstante Drehzahl vorgegeben. Der dritte Winkelbereich β liegt zwischen dem ersten α und dem zweiten γ Winkelbereich und komplettiert diese somit zum Gesamtwinkelbereich, innerhalb dem das Betätigungsmittel 5 gedreht werden kann.

Anstelle einer Skala mit numerischen Werten für die Anzahl der Verbraucher respektive für die Gesamtheizungsfläche sind radial neben dem Bedienknopf 5 am Bedienfeld des Elektronikgehäuses der Pumpenelektronik 4 entlang des Umfangs des Drehknopfes 5 Symbole angeordnet, die für unterschiedliche Leistungen 8a, 8b, 8c stehen. In Figur 1 sind diese Symbole durch stilisierte Häuser gebildet. In Figur 2 sind hier Vollkreise unterschiedlichen Durchmessers gewählt, wobei jeder dieser Kreise eine bestimmte Leistung 8a, 8b, 8c veranschaulicht, und die Größe der Symbole im Verhältnis zueinander angibt, in welche Drehrichtung die Leistung erhöht wird. Die Einstellung der Leistung erfolgt dadurch, dass eine Nase 5a des Betätigungsmittels 5 auf ein bestimmtes Symbol zeigt.

Entsprechende Symbole sind auf der symmetrisch gegenüberliegenden Seite des Bedienknopfes 5 für den zweiten Winkelbereich γ abgebildet. Auch hier sind in dem zweiten Einstellbereich 6c drei einstellbare Leistungen 8a, 8b, 8c durch Vollkreise herausgestellt, die durch eine entsprechende Winkelstellung der Nase 5a des Betätigungsmittels 5 ausgewählt werden können, wobei bei Winkelstellung des Betätigungsmittels 5 im zweiten Einstellbereich 6c dann sogleich auch den zweiten Betriebsmodus 7b, nämlich eine Konstantdruckregelung festgelegt.

Die Bedeutung der Symbole ist in der in Figur 3 dargestellten Tabelle 11 veranschaulicht, die Teil einer Betriebsanleitung ist, welche zusammen mit dem Heizungspumpenaggregat 1 vertrieben wird, d.h. im Lieferumfang enthalten ist.

Wird das Betätigungsmittel 5 mit seiner Nase 5a im ersten Winkelbereich α, d.h. zwischen 7:30 Uhr und 10:30 Uhr eingestellt, ist der erste Betriebsmodus 7a ausgewählt und es wird die Anzahl 9 der Verbraucher als Einstellgröße eingestellt, wie dies in der zweiten Zeile der Tabelle in Figur 3 veranschaulicht ist. Steht die Nase 5a beispielsweise auf der Einstellung 10:00 Uhr, so bedeutet dies beispielhaft, dass ein Vorgabewert von 10 Verbrauchern eingestellt ist. Die hydraulische Leistung des Heizungspumpenaggregats 1 ist somit für eine Heizungsanlage mit zehn Verbrauchern eingestellt. Steht die Nase 5a auf 9:00 Uhr, entspricht dies beispielsweise einer vorgegebenen Anzahl von zwanzig Verbrauchern. Der Vorgabewert ist also "20 Verbraucher". Wird die Nase 5a auf 8 Uhr eingestellt, so ist der Vorgabewert 30, d.h. die entsprechend zugeordnete Leistung 8c des Heizungspumpenaggregats 1 für eine Heizungsanlage mit dreißig Verbrauchern eingestellt. Selbstverständlich können aufgrund der kontinuierlichen Drehbarkeit des Betätigungsmittels 5 auch Vorgabewerte zwischen den in der Tabelle angegebenen Werten eingestellt werden, in dem die Nase 5a des Betätigungsmittels 5 auf eine entsprechende Zwischenposition zwischen den Symbolen respektive den ausgewiesenen Leistungen 8a, 8b, 8c positioniert wird.

Dasselbe Vorgehen erfolgt bei dem zweiten Winkelbereich γ, der von 1:30 Uhr bis 4:30 Uhr reicht, und in dem der zweite Betriebsmodus 7b ausgewählt ist, wobei hier die Heizungsgesamtfläche 10 als Einstellgröße eingestellt wird, die in der dritten Zeile der Tabelle 11 in Figur 3 dargestellt ist.

Hier bedeutet die Einstellung der Nase 5a des Betätigungsmittels 5 auf 2:00 Uhr, das ein Vorgabewert von 90m$^2$ eingestellt ist, d.h. eine erste hydraulische Leistung 8a bei dem Heizungspumpenaggregat 1 eingestellt ist, um eine Fußbodenheizung mit einer Gesamtfläche von 90qm$^2$ zu bedienen. Eine Einstellung der Nase 5a des Betätigungsmittels 5 auf 3:00 Uhr wählt eine zweite Leistung 8b aus, die größer ist als die erste Leistung 8a und eine Fußbodenheizung mit einer Gesamtfläche von 130qm$^2$ bedienen kann. Der Vorgabewert ist hier also 130m$^3$. Schließlich ergibt sich bei einer Einstellung der Nase 5a des Betätigungsmittels auf 4:00 Uhr ein Vorgabewert von 190m$^2$, d.h. eine solche hydraulische Leistung, bei der eine Fußbodenheizung mit einer Gesamtheizfläche von 190qm$^2$ bedient werden kann. Auch hier sind wieder beliebige Zwischenstellungen möglich um Vorgabewerte zwischen den in der Tabelle ausgewiesenen Werten 10 einstellen zu können.

Wie beschrieben, kann somit mit einem einzigen Drehknopf 5 zwischen drei verschiedenen Betriebsmodi gewählt werden, von denen zwei Betriebsmodi einen geregelten Betrieb und ein Betriebsmodus einen ungeregelten Betrieb darstellen, wobei gleichzeitig mit dem Betätigungsmittel 5 innerhalb jedem der drei Betriebsmodi die hydraulische Leistung des Heizungspumpenaggregats 1 eingestellt werden kann. Für den Fachmann ist somit die Betriebseinstellung des Heizungspumpenaggregats 1 besonders einfach. Er muss lediglich die Anzahl der Verbraucher zählen und im ersten Einstellbereich 6a einstellen, oder im Falle einer Fußbodenheizung die von dieser beheizte Gesamtfläche ermitteln, und entsprechend im zweiten Einstellbereich 6c einstellen.

Möchte er einen ungeregelten Betrieb, kann dies durch Einstellen der Nase 5a des Betätigungsmittels 5 im Bereich zwischen 10:30 Uhr und 1:30 Uhr erfolgen. Der entsprechende dritte Winkelbereich erstreckt sich somit von 90° bis 180°. Neben dem Bedienelement 5 sind am Bedienfeld der Pumpenelektronik 4 römische Ziffern I., II. und III. abgebildet, die verschiedene Leistungen 8a, 8b, 8c symbolisieren. Wird die Nase 5a des Bedienelements 5 beispielsweise auf 11:00 Uhr gestellt, so entspricht diese Winkelstellung einer ersten konstanten Drehzahl I. Wird die Nase 5a auf 12:00 Uhr gestellt, entspricht diese Winkeleinstellung einer zweiten Drehzahl konstanten II., und bei einer Einstellung der Nase 5a auf 1:00 Uhr ist eine dritte konstante Drehzahl III. eingestellt, wobei die zweite Drehzahl größer als die erste Drehzahl und die dritte Drehzahl größer als die zweite Drehzahl ist. Somit nimmt durch eine Drehung des Betätigungsmittels 5 im Uhrzeigersinn innerhalb des dritten Einstellbereichs 6b die eingestellte hydraulische Leistung zu. Dies ist ebenfalls im zweiten Einstellbereich 6c der Fall, wo ein Drehen des Betätigungsmittels 5 im Uhrzeigersinn ebenfalls eine Leistungserhöhung zur Folge hat.

Im ersten Einstellbereich 6a ist dagegen der Wirksinn zwischen der Drehrichtung und der Leistungseinstellung genau entgegengesetzt. D.h., dass eine Drehung des Betätigungsmittels 5 entgegen dem Uhrzeigersinn zu einer Leistungserhöhung führt. Dies ist dem Umstand geschuldet, eine symmetrische Anordnung der beiden Einstellbereiche 6a, 6c für die geregelten Betriebsmodi 7a, 7b zu erhalten. Denn die symmetrische Anordnung der Einstellbereiche für den geregelten Betrieb vereinfacht das Erscheinungsbild des Bedienfeldes und ermöglicht eine intuitive Bedienung für die Betriebseinstellung.

Es sei angemerkt, dass die in Figur 2 gezeigte Anordnung der verschiedenen Einstellbereiche 6a, 6b, 6c rein beispielhaft zu verstehen ist. So sind auch andere Anordnungen möglich. Beispielsweise können die Einstellbereiche 6a, 6c für die beiden geregelten Betriebsmodi nebeneinanderliegen und sich der dritte Einstellbereich 6b für den ungeregelten Betriebsmodus dann daran anschließen. Weiter alternativ kann der dritte Einstellbereich 6b für den ungeregelten Betriebsmodus gegenüber dem in Figur 2 gezeigten oberen Viertelkreis im unteren Viertelkreis liegen, so dass der Gesamteinstellbereich des Bedienelements 5 von 270° zwischen 1:30 Uhr und 10:30 Uhr liegt. Zudem kann der Gesamteinstellbereich gemäß einer Variante 360° betragen, so dass jedem der drei Einstellbereiche jeweils ein Winkelbereich von 120° zugeordnet sein kann.

Des Weiteren sei noch einmal darauf hingewiesen, dass beliebige andere als in den Figuren 1 und 2 verwendete Symbole zur Hervorhebung einzelner Leistungen 8a, 8b, 8c verwendet werden können. Auch sind die Zahlenangaben in Figur 3 rein beispielhaft zu verstehen, so dass gemäß anderen Ausführungsvarianten beliebig andere Zahlenwerte für die Anzahl 9 der Verbraucher oder Heizungsgesamtflächen 10 verwendet werden können.

Figuren 4a, 4b und 4c zeigen verschiedenen Ausführungsvarianten zur Einstellung der Leistung des Pumpenaggregats 1. Dargestellt ist erneut ein drehbares Betätigungsmittel 5, das in einem Gesamtwinkelbereich von etwa 240° gedreht werden kann.

Dieser Gesamtwinkelbereich ist in Fig. 4a symmetrisch aufgeteilt auf einen ersten Winkelbereich $\alpha$ und einen zweiten Winkelbereich $\gamma$, der jeweils etwa 120° umfasst. Wie bei dem vorherigen Beispiel kann innerhalb dem ersten Winkelbereich $\alpha$ eine Anzahl von Verbrauchern vorgegeben werden, innerhalb dem zweiten Winkelbereich $\gamma$ die zu beheizende Gesamtfläche ausgedrückt in Quadratmetern. Am Außenumfang des Betätigungsmittels 5 ist jedoch eine Skala mit Zahlenwerten dargestellt, die die Verbraucheranzahlen einerseits bzw. die Quadratmeterflächen andererseits in Klartext angegeben und die Einstellbereiche 6a, 6c repräsentieren. Es sind also im Vergleich zur Fig. 2 keine Symbole vorhanden. So kann im ersten Winkelbereich $\alpha$ eine Verbraucheranzahl zwischen 5 und 35 Verbrauchern eingestellt werden. Im zweiten Winkelbereich $\gamma$ kann eine Fläche zwischen 50 und 350 Quadratmetern eingestellt werden.

Das Pumpenaggregat 1 ist in dieser Ausführungsvariante in einer ersten Regelungsart 7a und in einer zweiten Regelungsart 7b betreibbar. Wird das Betätigungsmittel 5 in den ersten Winkelbereich $\alpha$ gedreht, d.h. eine Verbraucheranzahl eingestellt, so wird für den Betrieb des Pumpenaggregats standardmäßig eine Proportionaldruck-Regelung verwendet. Dies entspricht der ersten Regelungsart 7a. Wird demgegenüber das Betätigungsmittel 5 in den zweiten Winkelbereich $\gamma$ gedreht, d.h. eine Fläche eingestellt, so wird für den Betrieb des Pumpenaggregats standardmäßig eine Konstantdruck-Regelung verwendet. Dies entspricht der zweiten Regelungsart 7b. Die beiden Regelungsarten 7a, 7b sind als Icons den Winkelbereichen bzw. Einstellbereichen 6a, 6c zugeordnet.

Bei den Ausführungsbeispielen in Fig. 4b und 4c ist das Pumpenaggregat eingerichtet, nur einen Betriebsmodus auszuführen, nämlich eine Proportionaldruckregelung. Dies dient lediglich der Veranschaulichung der verschiedenen Möglichkeiten, die die Erfindung entfaltet und die der Fachmann hat. Alternativ könnte hier auch nur eine Konstantdruckregelung umgesetzt sein.

Auch in dieser Proportionaldruckregelung kann die Leistung des Pumpenaggregats durch Vorgabe der Verbraucheranzahl eingestellt werden. Hierzu sieht der Einstellbereich 6a Skalenwerte von 5 Verbrauchern bis 75 Verbrauchern vor, die entlang einer Skale eines Winkelbereichs $\alpha$ von 240 aufsteigend dargestellt sind. Die Nase 5a des Betätigungsmittels 5 kann auf eine dieser Verbraucheranzahlen gedreht werden, um die Leistung des Pumpenaggregats 1 einzustellen. In Fig. 4b ist eine lineare Skalierung der Zahlenwerte für die Verbraucheranzahlen gewählt. Im Falle von Figur 4c ist die Skalierung nichtlinear.

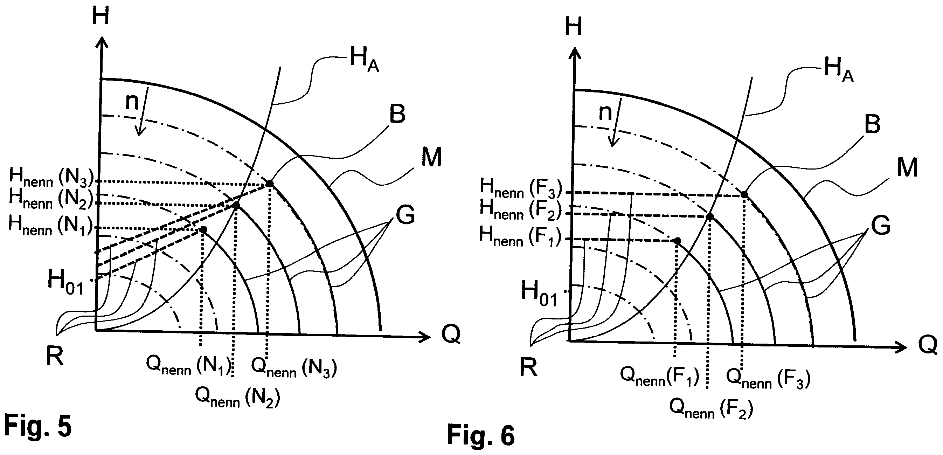

Wie nun die Leistung des Pumpenaggregats anhand der Verbraucheranzahl oder der zu beheizenden Fläche vom Pumpenaggregat bzw. von der Elektronik 4 festgelegt wird, wir nachfolgend anhand von Fig. 5 erläutert. Fig. 5 zeigt ein sogenanntes HQ-Diagramm, in dem typischerweise die den Zusammenhang zwischen Förderstrom Q und Förderhöhe H (Differenzdruck) beschreibenden Kennlinien eines Pumpenaggregats dargestellt werden.

Die Maximalkennlinie M beschreibt den Zusammenhang zwischen Förderstrom Q und Förderhöhe H bei Maximaldrehzahl. Entlang dieser dicken durchgezogenen Linie M ist somit die Drehzahl n konstant. Die strichpunktierten Linien stellen Pumpenkurven anderer Drehzahlen dar, wobei der Pfeil anzeigt, wie sich die Pumpenkurven mit fallender Drehzahl ändern. Eingezeichnet ist in das HQ-Diagramm ferner eine Parabel, die eine beispielhafte Anlagenkurve $H_A$ bildet, welche die Kennlinie der hydraulischen Anlage beschreibt. Die Steigung der Parabel ist abhängig vom hydraulischen Widerstand der Anlage, der wiederum wesentlich durch den Öffnungsgrad der Ventile, z.B. der Thermostatventile abhängt. Bei geöffneten Ventilen ist die Anlagenkurve $H_A$ flacher, bei geschlossenen Ventilen steiler. Als Betriebspunkt des Pumpenaggregats stellt sich der Schnittpunkt zwischen der der aktuellen Drehzahl zugeordneten Pumpenkurve und der Anlagenkurve $H_A$ ein.

Es sind ferner in dem HQ-Diagramm beispielhaft drei verschiedene Regelkennlinien R dargestellt, die durch die gestrichelten Linien gebildet sind. Diese ermöglichen eine Anpassung der Leistung des Pumpenaggregats 1 an den Bedarf der Anlage. Entlang dieser Regelkennlinien wird die Förderhöhe proportional zum Förderstrom eingestellt, d.h. in Abhängigkeit des Förderstroms Q das Pumpenaggregat 1 auf eine bestimmte Sollförderhöhe geregelt. Nach dem Stand der Technik werden diese Regelkennlinien R üblicherweise durch Vorgabe eines Förderhöhensollwerts eingestellt, die der maximalen Förderhöhe der Kennlinie entspricht, d.h. derjenigen Förderhöhe, die im Schnittpunkt der Regelkurve mit der Maximalkennlinie liegt.

Gemäß der Erfindung erfolgt die Festlegung der Regelkurve anhand des Vorgabewerts $N_1$, $N_2$, $N_3$ der Einstellgröße Nv, was in Fig. 5 am Beispiel drei verschiedener Verbraucheranzahlen $N_V = N_1$, $N_V = N_2$, $N_V = N_3$ veranschaulicht ist. Jede dieser Verbraucheranzahlen führt zu einer bestimmten Regelkennlinie R. Dies erfolgt erfindungsgemäß dadurch, dass aus dem Vorgabewert $N_V = N_1$, $N_2$, $N_3$ ein Kennwert Qnenn für den Förderstrom Q und ein Kennwert $H_{nenn}$ für die Förderhöhe H festgelegt wird. Dies erfolgt anhand der folgenden Berechnungsvorschriften:

$$H_{nenn} = H_{off} + H_V \cdot N_V,$$

$$Q_{nenn} = Q_{off} + Q_V \cdot N_V,$$

Dabei sind Hnenn der festzulegende Kennwert für die Förderhöhe H, Qnenn der festzulegende Kennwert für den Förderstrom Q, $H_{off}$ ein Förderhöhenoffset, $H_V$ ein Förderhöhenparameter, Qoff ein Förderstromoffset und Qv ein Förderstromparameter. Aus empirischen Daten kann der Förderhöhenoffset $H_{off}$ mit 0,5m, der Förderstromoffset $Q_{off}$ mit 200l/h, der Förderhöhenparameter $H_V$ mit 5cm pro Verbraucher und der Förderstromparameter Qv mit 40l/h pro Verbraucher angenommen werden. Somit ergibt sich beispielsweise für $N_3$ = 20 Verbraucher (Heizkörper) ein Förderhöhenkennwert $H_{nenn}$ von 1,5m und ein Förderstromkennwert Qnenn von 800 l/h. Diese beiden Kennwerte bilden gemeinsam einen Nennbetriebspunkt B.

Zur Festlegung der Regelkennlinie R kann die Berechnungsvorschrift

$$H(Q) = \frac{1}{2} H_{nenn} \left( \frac{Q}{Q_{nenn}} + 1 \right)$$

verwendet werden, bei der die Nullförderhöhe dem halben Förderhöhenkennwert $H_{nenn}$ entspricht und der Betriebspunkt B auf der Kennlinie liegt. Man erhält dadurch eine Kennlinie, die an die hydraulische Anlage angepasst ist. Ferner ist die Leistung des Pumpenaggregats in jedem Betriebspunkt an den Bedarf der Anlage angepasst.

Zusätzlich kann der Förderstromkennwert Qnenn oder können beide Kennwerte Hnenn, Qnenn für eine Begrenzung der Regelkennlinie R verwendet werden, um damit zu verhindern, dass der Betriebspunkt in Bereiche gelangt, die energetisch ungünstig sind. So kann der Förderstromkennwert Qnenn als Grenzwert (Q-Limit) verwendet werden. Dies entspricht jeweils einer der in Fig. 5 eingezeichneten punktierten Linien. Erreicht der Förderstrom Q auf der entsprechenden Regelkennlinie R diesen Grenzwert, wird die Drehzahl nicht weiter erhöht, sondern auf den Förderstromkennwert Qnenn begrenzt. Alternativ kann aus den beiden Kennwerten Hnenn, Qnenn eine Grenzdrehzahl berechnet werden, die eine Grenzkurve G beschreibt. Erreicht der Förderstrom Q auf der entsprechenden Regelkennlinie R diese Grenzdrehzahl, wird die Drehzahl nicht weiter erhöht. Dennoch kann sich der Volumenstrom weiter erhöhen, jedoch auf Kosten der Förderhöhe. Es wird dann entlang der entsprechenden Grenzkurve G geregelt.

Analog zur Anzahl der Verbraucher als Einstellgröße Nv kann auch die zu beheizenden oder kühlenden Fläche $N_F$ auf die vorbeschriebene Weise vorgegeben und zur Betriebseinstellung des Pumpenaggregats 1 ausgewertet werden.

Hier erfolgt die Festlegung einer Regelkurve R anhand des Vorgabewerts $F_1$, $F_2$, $F_3$ der Einstellgröße F, was in Fig. 6 am Beispiel drei verschiedener Flächengrößen F = $F_1$, F = $F_2$, F = $F_3$ veranschaulicht ist. Jede dieser Flächengrößen F führt zu einer bestimmten Regelkennlinie R. Dies erfolgt z.B. dadurch, dass im Falle einer Radiatorheizung oder einer Kühlanlage mit Kühlregistern (also mit diskreten Verbrauchern) aus dem Vorgabewert F = $F_1$, $F_2$, $F_3$ für die zu beheizende oder kühlende Fläche (z.B. in Quadratmeter) nur ein Kennwert Hnenn für die Förderhöhe H festgelegt wird. Hierzu dient die folgende Berechnungsvorschrift:

$$H_{nenn} = H_{off} + H_F \cdot F,$$

Dabei sind $H_{nenn}$ der festzulegende Kennwert für die Förderhöhe H, $H_{off}$ ein Förderhöhenoffset und $H_F$ ein Förderhöhenparameter. Aus empirischen Daten kann der Förderhöhenoffset $H_{off}$ mit 0,5m und der Förderhöhenparameter $H_F$ mit 0,3cm pro Quadratmeter angenommen werden. Somit ergibt sich beispielsweise für eine Fläche von F = 200m$^2$ ein Förderhöhenkennwert Hnenn von 1,6m.

Durch den Förderhöhenkennwert Hnenn ist auch die Regelkennlinie R festgelegt, wonach die Förderhöhe H über dem Volumenstrom Q konstant gehalten wird bzw. werden soll:

$$H(Q) = H_{nenn}$$

Hierdurch ist die Leistung des Pumpenaggregats 1 ebenfalls in jedem Betriebspunkt an den Bedarf der Anlage angepasst.

Zusätzlich zum Förderhöhenkennwert $H_{nenn}$ kann ein Förderstromkennwert Qnenn aus

$$Q_{nenn} = Q_{off} + Q_F \cdot F,$$

ermittelt und zur Begrenzung der Regelkennlinie R verwendet werden, um damit zu verhindern, dass der Betriebspunkt in Bereiche gelangt, die energetisch ungünstig sind. Aus empirischen Daten kann der Förderstromoffset $Q_{off}$ mit 100l/h und der Förderstromparameter $Q_F$ mit 3l/h pro Quadratmeter angenommen werden. Somit ergibt sich beispielsweise für eine Fläche von F = 100m$^2$ ein Förderstromkennwert Qnenn von 400l/h. Die beiden Kennwerte bilden dann gemeinsam einen Nennbetriebspunkt B.

Der Förderstromkennwert Qnenn kann als Grenzwert (Q-Limit) verwendet werden. Dies entspricht jeweils einer der in Fig. 6 eingezeichneten punktierten Linien. Erreicht der Förderstrom Q auf der entsprechenden Regelkennlinie R diesen Grenzwert, wird die Drehzahl nicht weiter erhöht, sondern auf den Förderstromkennwert Qnenn begrenzt. Alternativ kann aus den beiden Kennwerten Hnenn, Qnenn eine Grenzdrehzahl berechnet werden, die eine Grenzkurve G beschreibt. Erreicht der Förderstrom Q auf der entsprechenden Regelkennlinie R diese Grenzdrehzahl, wird die Drehzahl nicht weiter erhöht. Dennoch kann sich der Volumenstrom weiter erhöhen, jedoch auf Kosten der Förderhöhe. Es wird dann entlang der entsprechenden Grenzkurve G geregelt.

Liegt bei der Anlage eine Fußbodenheizung oder Deckenkühlung vor, so kann die Festlegung der Kennwerte Hnenn, Qnenn aufgrund der Flächengröße F wie folgt erfolgen:

$$H_{nenn} = H_{const}$$

$$Q_{nenn} = Q_{off} + Q_F \cdot F.$$

Der Förderhöhenkennwert $H_{nenn}$ kann auf konstante 2m festgelegt werden. Mit einem Förderstromoffset Qoff von 200l/h und einem Förderstromparameter $Q_F$ von 4l/h pro Quadratmeter ergibt sich beispielsweise für eine Fläche von F = 100m$^2$ ein Förderstromkennwert Qnenn von 600l/h.

Auch in diesem, für eine Fußbodenheizung oder Deckenkühlung vorgesehene Festlegung der Kennwerte kann eine Limitierung des Volumenstroms entlang der Kennlinie R erfolgen, indem der Förderstromkennwert als Maximalwert für den Volumenstrom (Q-Limit) verwendet wird, oder aus den beiden Kennwerten $H_{nenn}$ und $Q_{nenn}$ diejenige Drehzahl berechnet und als Maximaldrehzahl (n-Limit) verwendet wird, auf deren Drehzahlkurve M der durch die beiden Kennwerte gebildete Betriebspunkt B liegt.

Durch das erfindungsgemäße Pumpenaggregat und das erfindungsgemäße Verfahren wird die Einstellung des Pumpenaggregats bei der Inbetriebnahme erheblich vereinfacht. Der Anwender muss somit nur noch die Anzahl an Verbrauchern zählen oder die zu beheizende/ kühlende Fläche ermitteln. Weder ist eine Kenntnis der hydraulischen Anlage noch des Pumpenkennfeldes erforderlich.

**Patentansprüche**

1. Verfahren zur Betriebseinstellung eines in seiner Leistung regelbaren Pumpenaggregats (1) in einer hydraulischen Anlage eines Gebäudes mit einer Anzahl an vom Pumpenaggregat mit Wärme- oder Kühlleistung versorgten Verbrauchern durch Vorgabe eines Vorgabewerts ($N_1$. $N_2$, $N_3$, $F_1$, $F_2$, $F_3$) einer Einstellgröße (Nv, $N_R$, F), **dadurch gekennzeichnet, dass** die Einstellgröße (Nv, $N_R$, F) die Anzahl (Nv) der Verbraucher oder eine Anzahl ($N_R$) einer hierzu korrespondierenden zählbaren Einheit, oder die zu beheizende oder kühlende Fläche (F) des Gebäudes ist, wobei aus dem Vorgabewert ($N_1$, $N_2$, $N_3$, $F_1$, $F_2$, $F_3$) der Einstellgröße (Nv, $N_R$, F) von einer dem Pumpenaggregat (1) zugeordneten Elektronik (4) ein Kennwert ($H_{nenn}$) für die Förderhöhe (H) und/ oder ein Kennwert (Qnenn) für den Förderstrom (Q) des Pumpenaggregats (1) festgelegt und das Pumpenaggregat (1) in Abhängigkeit des Kennwerts (Hnenn) für die Förderhöhe (H) oder des Kennwerts (Qnenn) für den Förderstrom (Q) oder dieser beiden Kennwerte (Qnenn, Hnenn) angesteuert wird.

2. Verfahren nach Anspruch 1, **dadurch gekennzeichnet, dass** die korrespondierende zählbare Einheit die Anzahl ($N_R$) der zu beheizenden oder zu kühlenden Räume des Gebäudes ist.

3. Verfahren nach Anspruch 1 oder 2, **dadurch gekennzeichnet, dass** ein Bereich von Vorgabewerten ($N_1$, $N_2$, $N_3$, $F_1$, $F_2$, $F_3$) der Einstellgröße (Nv, $N_R$, F) vorgegeben und aus diesem Bereich ein repräsentativer Vorgabewert verwendet wird, beispielsweise ein Mittelwert des entsprechenden Bereichs.

4. Verfahren nach Anspruch 3, **dadurch gekennzeichnet, dass** der Bereich aus einer Anzahl von Bereichen ausgewählt wird, wobei die Bereiche eine unterschiedliche Größe aufweisen, insbesondere mit steigender Anzahl oder Fläche größer werden.

5. Verfahren nach einem der vorherigen Ansprüche, **dadurch gekennzeichnet, dass** die Festlegung des Kennwerts ($H_{nenn}$) für die Förderhöhe (H) durch eine der folgenden Berechnungsvorschriften erfolgt:

$$H_{nenn} = H_{off} + H_V \cdot N_V,$$

$$H_{nenn} = H_{off} + H_R \cdot N_R,$$

oder

$$H_{nenn} = H_{off} + H_F \cdot F,$$

wobei

$H_{nenn}$ der festzulegende Kennwert für die Förderhöhe ist,
$H_{off}$ ein vordefinierter Förderhöhenoffset ist,
$H_V$ ein vordefinierter Förderhöhenparameter ist, der eine Förderhöhe pro Verbraucher ausdrückt,
$H_R$ ein vordefinierter Förderhöhenparameter ist, der eine Förderhöhe pro Einheit, insbesondere pro Raum ausdrückt,
$H_F$ ein vordefinierter Förderhöhenparameter ist, der eine Förderhöhe pro Flächeneinheit, insbesondere pro Quadratmeter Fläche ausdrückt,
Nv die durch den Vorgabewert vorgegebene Anzahl der Verbraucher ist,
$N_R$ die durch den Vorgabewert vorgegebene Anzahl der Einheiten insbesondere der Räume ist, und

F die durch den Vorgabewert vorgegebene Fläche des Gebäudes ist.

6. Verfahren nach einem der vorherigen Ansprüche, **dadurch gekennzeichnet, dass** die Festlegung des Kennwerts ($Q_{nenn}$) für den Förderstrom (Q) durch eine der folgenden Berechnungsvorschriften erfolgt:

$$Q_{nenn} = Q_{off} + Q_V \cdot N_V,$$

oder

$$Q_{nenn} = Q_{off} + Q_R \cdot N_R,$$

$$Q_{nenn} = Q_{off} + Q_F \cdot F,$$

wobei

Qnenn der festzulegende Kennwert für den Förderstrom ist,
Qoff ein vordefinierter Förderstromoffset ist,
Qv ein vordefinierter Förderstromparameter ist, der einen Förderstrom pro Verbraucher ausdrückt,
$Q_R$ ein vordefinierter Förderstromparameter ist, der eine Förderstrom pro Einheit, insbesondere pro Raum ausdrückt,
$Q_F$ ein vordefinierter Förderstromparameter ist, der eine Förderstrom pro Flächeneinheit, insbesondere pro Quadratmeter Fläche ausdrückt,
Nv die durch den Vorgabewert vorgegebene Anzahl der Verbraucher ist,
$N_R$ die durch den Vorgabewert vorgegebene Anzahl der Einheiten insbesondere der Räume ist, und
F die durch den Vorgabewert vorgegebene Fläche des Gebäudes ist.

7. Verfahren nach Anspruch 5 oder 6, **dadurch gekennzeichnet,**

**dass** die Vordefinition des Förderhöhenoffsets $H_{off}$ zwischen 30cm und 80cm, bevorzugt etwa 50cm beträgt, und/ oder
**dass** die Vordefinition des Förderstromoffsets Qoff zwischen 0l/h und 500l/h, bevorzugt etwa 200l/h beträgt, und/ oder
**dass** die Vordefinition des Förderhöhenparameters $H_v$, $H_R$, $H_F$ zwischen 2cm und 10cm, bevorzugt etwa 5cm pro Verbraucher oder Einheit, oder zwischen 0,1cm und 0,6cm, bevorzugt etwa 0,3cm pro Quadratmeter Fläche beträgt, und/ oder
**dass** die Vordefinition des Förderstromparameters Qv, $Q_R$, $Q_F$ zwischen 30l/h und 50l/h, bevorzugt etwa 40l/h pro Verbraucher oder Einheit, oder zwischen 1l/h und 8l/h, bevorzugt im Bereich von 3l/h bis 4l/h pro Quadratmeter Fläche beträgt.

8. Verfahren nach einem der vorherigen Ansprüche, **dadurch gekennzeichnet, dass** die Elektronik vor oder nach der Vorgabe der Fläche (F) als Einstellgröße (Nv, $N_R$, F) eine Eingabe erwartet, die angibt, ob die hydraulische Anlage eine Flächenheizung oder Flächenkühlung ist, wobei in Abhängigkeit der Eingabe der oder ein Kennwert ($H_{nenn}$) für die Förderhöhe (H) und/ oder der Kennwert ($Q_{nenn}$) für den Förderstrom (Q) festgelegt wird.

9. Verfahren nach Anspruch 8, **dadurch gekennzeichnet, dass** wenn die Eingabe angibt, dass die hydraulische Anlage eine Flächenheizung oder Flächenkühlung ist, die Festlegung eines Kennwerts ($H_{nenn}$) für die Förderhöhe (H) und des Kennwerts ($Q_{nenn}$) für den Förderstrom (Q) durch:

$$H_{nenn} = H_{const,}$$

$$Q_{nenn} = Q_{off} + Q_F \cdot F,$$

erfolgt, wobei

Hnenn der festzulegende Kennwert für die Förderhöhe ist,

Hconst eine Konstante im Bereich von 1,0m bis 3m, vorzugsweise etwa 2m ist;

Qnenn der festzulegende Kennwert für den Förderstrom ist,

Qoff ein Förderstromoffset im Bereich von 0 bis 500l/h, vorzugsweise etwa 200l/h ist,

$Q_F$ ein Förderstromparameter im Bereich von 1l/(h·m$^2$) bis 8l/(h·m$^2$), vorzugsweise etwa 4l/(h·m$^2$) ist, und

F die durch den Vorgabewert vorgegebene Fläche des Gebäudes ist.

**10.** Verfahren nach Anspruch 8 oder 9, **dadurch gekennzeichnet, dass** wenn die Eingabe angibt, dass die hydraulische Anlage keine Flächenheizung oder Flächenkühlung ist, die Festlegung des Kennwerts (Hnenn) für die Förderhöhe (H) und des Kennwerts (Qnenn) für den Förderstrom (Q) durch:

$$H_{nenn} = H_{off} + H_F \cdot F,$$

$$Q_{nenn} = Q_{off} + Q_F \cdot F,$$

erfolgt, wobei

$H_{nenn}$ der festzulegende Kennwert für die Förderhöhe ist,

$H_{off}$ ein Förderhöhenoffset im Bereich von 30cm bis 80cm, vorzugsweise etwa 50cm ist,

$H_F$ ein Förderhöhenparameter im Bereich von 0,1cm/ m$^2$ bis 0,6cm/ m$^2$, vorzugsweise etwa 0,3cm/m$^2$ ist,

Qnenn der festzulegende Kennwert für den Förderstrom ist,

Qoff ein Förderstromoffset im Bereich zwischen 0 bis 500l/h, vorzugsweise etwa 100l/h ist,

$Q_F$ ein Förderstromparameter im Bereich zwischen 1l/(h·m$^2$) und 5l/(h·m$^2$), vorzugsweise etwa 3l/(h·m$^2$) ist, und

F die durch den Vorgabewert vorgegebene Fläche des Gebäudes ist.

**11.** Verfahren nach Anspruch 8, 9 oder 10, **dadurch gekennzeichnet, dass** das Pumpenaggregat in einer ersten Regelungsart geregelt wird, wenn die Eingabe angibt, dass die hydraulische Anlage keine Flächenheizung oder Flächenkühlung ist, und in einer zweiten Regelungsart geregelt wird, wenn die Eingabe angibt, dass die hydraulische Anlage eine Flächenheizung oder Flächenkühlung ist.

**12.** Verfahren nach einem der Ansprüche 1 bis 7, **dadurch gekennzeichnet, dass** das Pumpenaggregat in einer ersten Regelungsart geregelt wird, wenn als Einstellgröße (Nv, $N_R$, F) die Anzahl (Nv, $N_R$) der Verbraucher oder dazu korrespondierenden Einheiten vorgegeben wird, und in einer zweiten Regelungsart geregelt wird, wenn als Einstellgröße (Nv, $N_R$, F) die zu beheizende oder kühlende Fläche (F) vorgegeben wird.

**13.** Verfahren nach Anspruch 11 oder 12, **dadurch gekennzeichnet, dass** die erste Regelungsart eine Proportionaldruckregelung ist.

**14.** Verfahren nach einem der Ansprüche 11 bis 13, **dadurch gekennzeichnet, dass** aus den beiden Kennwerten (Hnenn, Qnenn) eine Regelkennlinie (R) festgelegt wird, gemäß welcher das Pumpenaggregat in der ersten Regelungsart geregelt wird.

**15.** Verfahren nach einem der Ansprüche 11 bis 14, **dadurch gekennzeichnet, dass** die zweite Regelungsart eine Konstantdruckregelung ist.

**16.** Verfahren nach Anspruch 15, **dadurch gekennzeichnet, dass** allein aus dem Kennwert (Hnenn) für die Förderhöhe eine Regelkennlinie (R) ermittelt wird, gemäß welcher das Pumpenaggregat in der zweiten Regelungsart geregelt wird.

**17.** Verfahren nach Anspruch 14 oder 16, **dadurch gekennzeichnet, dass** ein durch die beiden Kennwerte (Hnenn, Qnenn) definierter Betriebspunkt (B) auf der Regelkurve (R) liegt.

**18.** Verfahren nach einem der vorherigen Ansprüche, **dadurch gek nnzeichnet, dass** bei der ersten oder zweiten Regelungsart zumindest einer der beiden Kennwerte (Hnenn, Qnenn) einen Grenzwert bildet oder aus zumindest einem der beiden Kennwerten ($H_{nenn}$, Qnenn) wenigstens ein Grenzwert ermittelt wird, und das Pumpenaggregat derart betrieben wird, dass der Grenzwert nicht überschritten wird.

**EP 3 366 925 B1**

**19.** Verfahren nach einem der vorherigen Ansprüche, **dadurch gekennzeichnet, dass** das Pumpenaggregat in einer Regelungsart betreibbar ist, in der die hydraulische Leistung des Pumpenaggregats automatisch an den Bedarf der Anlage angepasst wird, wobei bei Einstellung dieser Regelungsart zumindest einer der beiden Kennwerte (Hnenn, Qnenn) einen Grenzwert bildet oder aus zumindest einem der beiden Kennwerten ($H_{nenn}$, Qnenn) wenigstens ein Grenzwert ermittelt wird, und das Pumpenaggregat derart betrieben wird, dass der Grenzwert nicht überschritten wird.

**20.** Verfahren nach Anspruch 16 oder 17, **dadurch gekennzeichnet, dass** der aus den beiden Kennwerten (Hnenn, Qnenn) berechnete Grenzwert eine Grenzdrehzahl ist.

**21.** Verfahren nach einem der Ansprüche 5, 6, 8 oder 10, **dadurch gekennzeichnet, dass** der Förderhöhenoffset $H_{off}$, der Förderstromoffset $Q_{off}$, der Förderhöhenparameter $H_v$, $H_R$, $H_F$ und/ oder der Förderstromparameter $Q_v$, $Q_R$, $Q_F$ in der Elektronik parametrierbar ist/ sind.

**22.** Anordnung (1, 4) eines in seiner Leistung regelbaren Pumpenaggregats (1), insbesondere eines Kreiselpumpenaggregats, für eine hydraulischen Anlage eines Gebäudes mit einer Anzahl an vom Pumpenaggregat (1) mit Wärme- oder Kühlleistung zu versorgenden Verbrauchern, und einer dem Pumpenaggregat (1) zugeordneten Elektronik (4), mit der eine Betriebseinstellung des Pumpenaggregats (1) durch Vorgabe eines Vorgabewerts ($N_1$, $N_2$, $N_3$, $F_1$, $F_2$, $F_3$) einer Einstellgröße (Nv, $N_R$, F) zumindest mittelbar einstellbar ist, **dadurch gekennzeichnet, dass** die Einstellgröße (Nv, $N_R$, F) die Anzahl (Nv) der Verbraucher oder eine Anzahl ($N_R$) einer hierzu korrespondierenden zählbaren Einheit, oder die zu beheizende oder kühlende Fläche (F) des Gebäudes ist, und dass die Anordnung eingerichtet ist, das Verfahren gemäß mindestens einem der Ansprüche 1 bis 21 auszuführen.

**23.** Anordnung (1, 4) nach Anspruch 22, **dadurch gekennzeichnet, dass** die Elektronik (4) eingerichtet ist, das Pumpenaggregat (1) bei Vorgabe der Anzahl (Nv, $N_R$) in einer ersten Regelungsart (7a) und/ oder bei Vorgabe der Fläche (F) in einer zweiten Regelungsart (7a) zu betreiben

**24.** Anordnung (1, 4) nach Anspruch 22 oder 23, **dadurch gekennzeichnet, dass** die Elektronik (4) ein drehbares Betätigungsmittel (5) aufweist, mittels welchem in einem ersten Winkelbereich ($\alpha$) die Leistung anhand der Anzahl (Nv, $N_R$) und in einem zweiten Winkelbereich (y) anhand der Fläche (F) vorgebbar ist.

**25.** Anordnung (1, 4) nach einem der Ansprüche 22 bis 24, **dadurch gekennzeichnet, dass** die Elektronik (4) eine Umschalteinrichtung aufweist, mittels welcher zur Einstellung der Leistung zwischen einer Vorgabe der Anzahl (Nv, $N_R$) und einer direkten Vorgabe einer förderstromabhängigen Förderhöhe (H) umschaltbar ist und/ oder zwischen der Vorgabe der Fläche (F) und einer direkten Vorgabe einer konstanten Förderhöhe (H) umschaltbar ist.

**26.** Anordnung (1, 4) nach Anspruch 23, **dadurch gekennzeichnet, dass** die Elektronik (4) eingerichtet ist, das Pumpenaggregat (1) in der ersten Regelungsart gemäß einer Proportionaldruck-Kennlinie (R) zu regeln, die durch die Kennwerte (Hnenn, Qnenn) festgelegt, insbesondere durch zumindest einen der Kennwerte ($H_{nenn}$, Qnenn) oder einen daraus ermittelten Grenzwert begrenzt ist.

**27.** Anordnung (1, 4) nach Anspruch 23 oder 26, **dadurch gekennzeichnet, dass** die Elektronik (4) eingerichtet ist, das Pumpenaggregat (1) in der zweiten Regelungsart gemäß einer Konstantdruck-Kennlinie zu regeln, die durch den Förderstromkennwert (Qnenn) oder einem aus den Kennwerten (Hnenn, Qnenn) ermittelten Grenzwert (G) förderstrombegrenzt ist.

**28.** Anordnung (1, 4) nach Anspruch 24, **dadurch gekennzeichnet, dass** jeder Winkeleinstellung des Betätigungsmittels (5) eine bestimmte Anzahl (Nv, $N_R$) der Verbraucher oder Einheiten oder eine bestimmte zu heizenden oder kühlende Fläche (F), oder ein bestimmter Bereich mit Anzahlen oder Flächen zugeordnet ist, und dass diese Zuordnung über den entsprechenden Winkelbereich ($\alpha$, $\beta$) nichtlinear ist.

**29.** Anordnung (1, 4) nach Anspruch 24 oder 28, **dadurch gekennzeichnet, dass** jedem Winkelbereich ($\alpha$, $\beta$, y) eine radial neben dem Betätigungsmittels (5) angeordnete, sich entlang seines Umfangs erstreckende Skala oder eine Anordnung von Symbolen oder Markierungen zugeordnet ist, die verschiedene Anzahlen (Nv, $N_R$) und/ oder Flächen (F) repräsentieren.

**30.** Set bestehend aus einer Anordnung (1, 4) nach Anspruch 29 und einem Informationsträger, wobei der Informationsträger eine Tabelle (11) umfasst, die eine Zuordnung der Symbole oder Markierungen zu der jeweiligen Anzahl

**21**

(Nv, $N_R$) und/ oder Fläche (F) umfasst.

**Claims**

1. Method for the operating adjustment of a variable output pump assembly (1) in a hydraulic system of a building with a number of consumers supplied with heating or cooling by the pump assembly through the specification of a standard value ($N_1$, $N_2$, $N_3$, $F_1$, $F_2$, $F_3$) of a setting parameter (Nv, $N_R$, F), **characterised by** the setting parameter (Nv, $N_R$, F) being the number (Nv) of consumers or a number ($N_R$) of a corresponding countable unit, or the area (F) of the building that is to be heated or cooled, in which the standard value ($N_1$, $N_2$, $N_3$, $F_1$, $F_2$, $F_3$) of the setting parameter (Nv, $N_R$, F) is used by electronics (4) assigned to the pump assembly (1) to establish a characteristic value (Hnenn) for the pumping head (H) and/or a characteristic value (Qnenn) for the flow rate (Q) of the pump assembly (1) and the pump assembly (1) is controlled depending on the characteristic value (Hnenn) for the pumping head (H) or the characteristic value (Qnenn) for the flow rate (Q) or both of these characteristic values (Qnenn, Hnenn).

2. Method according to claim 1, **characterised by** the corresponding countable unit being the number ($N_R$) of rooms in the building that are to be heated or cooled.

3. Method according to claim 1 or 2, **characterised by** a range of standard values ($N_1$, $N_2$, $N_3$, $F_1$, $F_2$, $F_3$) being specified for the setting parameter (Nv, $N_R$, F) and a representative standard value from this range being used, for example, a mean value of the corresponding range.

4. Method according to claim 3, **characterised by** the range being selected from a number of ranges, in which the ranges have different sizes, in particular becoming larger with an increasing number or area.

5. Method according to one of the preceding claims, **characterised by** the characteristic value (Hnenn) for the pumping head (H) being established using one of the following calculation rules:

$$H_{nenn} = H_{off} + H_V \cdot N_V,$$

$$H_{nenn} = H_{off} + H_R \cdot N_R,$$

$$H_{nenn} = H_{off} + H_F \cdot F,$$

or where

Hnenn is the characteristic value to be established for the pumping head,
$H_{off}$ is a predefined pumping head offset,
$H_V$ is a predefined pumping head parameter that expresses a pumping head per consumer,
$H_R$ is a predefined pumping head parameter that expresses a pumping head per unit, notably per room,
$H_F$ is a predefined pumping head parameter that expresses a pumping head per unit of area, notably per square meter of area,
Nv is the number of consumers specified by the standard value,
$N_R$ is the number of units specified by the standard value, notably the number of rooms, and
F is the area of the building specified by the standard value.

6. Method according to one of the preceding claims, **characterised by** the characteristic value (Qnenn) for the flow rate (Q) being established using one of the following calculation rules:

$$Q_{nenn} = Q_{off} + Q_V \cdot N_V,$$

$$Q_{nenn} = Q_{off} + Q_R \cdot N_R,$$

or

$$Q_{nenn} = Q_{off} + Q_F \cdot F,$$

where

Qnenn is the characteristic value to be established for the flow rate,
Qoff is a predefined flow rate offset,
Qv is a predefined flow rate parameter that expresses a flow rate per consumer,
$Q_R$ is a predefined flow rate parameter that expresses a flow rate per unit, notably per room,
$Q_F$ is a predefined flow rate parameter that expresses a flow rate per unit of area, notably per square meter of area,
Nv is the number of consumers specified by the standard value,
$N_R$ is the number of units specified by the standard value, notably the number of rooms, and
F is the area of the building specified by the standard value.

7.  Method according to claim 5 or 6, **characterised by**

    **the** predefined pumping head offset $H_{off}$ being in the range of 30cm to 80cm, preferably about 50cm, and/or
    **the** predefined flow rate offset Qoff being in the range of 0l/h to 500l/h, preferably about 200l/h, and/or
    **the** predefined pumping head parameter $H_v$, $H_R$, $H_F$ being in the range of 2cm to 10cm, preferably about 5cm per consumer or unit, or in the range of 0.1cm to 0.6cm, preferably about 0.3cm per square meter of area, and/or
    the predefined flow rate parameter Qv, $Q_R$, $Q_F$ being in the range of 30l/h to 50l/h, preferably about 40l/h per consumer or unit, or in the range of 1l/h to 8l/h, preferably in the range of 3l/h to 4l/h per square metre of area.

8.  Method according to one of the preceding claims, **characterised by** the electronics, before or after specifying the area (F), expecting an input as a setting parameter (Nv, $N_R$, F) that specifies whether the hydraulic system is a radiant panel heating or cooling system, in which, depending on the input, the or a characteristic value (Hnenn) is established for the pumping head (H) and/or the characteristic value (Qnenn) is established for the flow rate (Q).

9.  Method according to claim 8, **characterised by**, when the input specifies that the hydraulic system is a radiant panel heating or cooling system, a characteristic value (Hnenn) for the pumping head (H) and the characteristic value (Qnenn) for the flow rate (Q) being established by:

$$H_{nenn} = H_{const},$$

$$Q_{nenn} = Q_{off} + Q_F \cdot F,$$

where

Hnenn is the characteristic value to be established for the pumping head,
Hconst is a constant in the range of 1.0m to 3m, preferably about 2m;
Qnenn is the characteristic value to be established for the flow rate,
Qoff is a flow rate offset in the range of 0 to 500l/h, preferably about 200l/h,
$Q_F$ is a flow rate parameter in the range of $1l/(h \cdot m^2)$ to $8l/(h \cdot m^2)$, preferably about $4l/(h \cdot m^2)$, and
F is the area of the building specified by the standard value.

10. Method according to claim 8 or 9, **characterised by**, when the input specifies that the hydraulic system is not a radiant panel heating or cooling system, the characteristic value (Hnenn) for the pumping head (H) and the characteristic value (Qnenn) for the flow rate (Q) being established by:

$$H_{nenn} = H_{off} + H_F \cdot F,$$

$$Q_{nenn} = Q_{off} + Q_F \cdot F,$$

where

Hnenn is the characteristic value to be established for the pumping head,
$H_{off}$ is a pumping head offset in the range of 30cm to 80cm, preferably about 50cm,
$H_F$ is a pumping head parameter in the range of $0.1cm/m^2$ to $0.6cm/m^2$, preferably about $0.3cm/m^2$,
Qnenn is the characteristic value to be established for the flow rate,
Qoff is a flow rate offset in the range of 0 to 500l/h, preferably about 100l/h,
$Q_F$ is a flow rate parameter in the range of $1l/(h\cdot m^2)$ to $5l/(h\cdot m^2)$, preferably about $3l/(h\cdot m^2)$, and
F is the area of the building specified by the standard value.

11. Method according to claim 8, 9 or 10, **characterised by** the pump assembly being controlled in a first control mode when the input specifies that the hydraulic system is not a radiant panel heating or cooling system, and in a second control mode when the input specifies that the hydraulic system is a radiant panel heating or cooling system.

12. Method according to one of the claims 1 through 7, **characterised by** the pump assembly being controlled in a first control mode when the setting parameter ($Nv$, $N_R$, F) specifies the number ($N_V$, $N_R$) of consumers or the corresponding units, and in a second control mode when the setting parameter ($Nv$, $N_R$, F) specifies the area (F) that is to be heated or cooled.

13. Method according to claim 11 or 12, **characterised by** the first control mode being proportional pressure control.

14. Method according to one of the claims 11 through 13, **characterised by** a control characteristic (R) being established from the two characteristic values (Hnenn, Qnenn) and used to control the pump assembly in the first control mode.

15. Method according to one of the claims 11 through 14, **characterised by** the second control mode being constant pressure control.

16. Method according to claim 15, **characterised by** a control characteristic (R) being determined from the characteristic value (Hnenn) for the pumping head only and used to control the pump assembly in the second control mode.

17. Method according to claim 14 or 16, **characterised by** an operating point (B) formed by the two characteristic values (Hnenn, Qnenn) lying on the control curve (R).

18. Method according to one of the preceding claims, **characterised by** at least one of the characteristic values (Hnenn, Qnenn) forming a limit value or at least one limit value being determined from at least one of the characteristic values (Hnenn, Qnenn) with the first or second control mode, and the pump assembly being operated so that the limit value is not exceeded.

19. Method according to one of the preceding claims, **characterised by** the ability to operate the pump assembly in a control mode in which the hydraulic output of the pump assembly is automatically adapted to the demand of the system, with at least one of the characteristic values (Hnenn, Qnenn) forming a limit value or at least one limit value being determined from at least one of the characteristic values (Hnenn, Qnenn) in the adjustment of this control mode, and the pump assembly being operated so that the limit value is not exceeded.

20. Method according to claim 16 or 17, **characterised by** the limit value calculated from the two characteristic values (Hnenn, Qnenn) being a rotational speed limit value.

21. Method according to one of the claims 5, 6, 8 or 10, **characterised by** the pumping head offset $H_{off}$, the flow rate offset $Q_{off}$, the pumping head parameter $H_V$, $H_R$, $H_F$ and/or the flow rate parameter $Q_V$, $Q_R$, $Q_F$ being parameterisable in the electronics.

22. Arrangement (1, 4) of a pump assembly (1) with controllable output, notably a rotary pump assembly, for a hydraulic system of a building with a number of consumers supplied with heating or cooling by the pump assembly (1), and electronics (4) assigned to the pump assembly (1) that permit an at least indirect operating adjustment of the pump assembly (1) by specifying a standard value ($N_1$, $N_2$, $N_3$, $F_1$, $F_2$, $F_3$) of a setting parameter ($Nv$, $N_R$, F), **characterised by** the setting parameter ($Nv$, $N_R$, F) being the number ($Nv$) of consumers or a number ($N_R$) of a corresponding countable unit, or the area (F) of the building that is to be heated or cooled, and by the arrangement being configured to execute the method according to at least one of the claims 1 through 21.

**23.** Arrangement (1, 4) according to claim 22, **characterised by** the electronics (4) being configured to operate the pump assembly (1) with the specification of a number (Nv, $N_R$) in a first control mode (7a) and/or the specification of the area (F) in a second control mode (7a).

**24.** Arrangement (1, 4) according to claim 22 or 23, **characterised by** the electronics (4) having a swivelling actuating means (5) that allows the output to be specified in a first angle range ($\alpha$) according to the number (Nv, $N_R$) and in a second angle range (y) according to the area (F).

**25.** Arrangement (1, 4) according to one of the claims 22 through 24, **characterised by** the electronics (4) having a switch device that, to adjust the output, can be switched between specifying the number (Nv, $N_R$) and directly specifying a flow rate dependent pumping head (H), and/or between specifying the area (F) and directly specifying a constant pumping head (H).

**26.** Arrangement (1, 4) according to claim 23, **characterised by** the electronics (4) being configured to control the pump assembly (1) in the first control mode according to a proportional pressure characteristic curve (R) that is established by the characteristic values (Hnenn, Qnenn), notably by at least one of the characteristic values (Hnenn, Qnenn) or limited by a limit value determined from the same.

**27.** Arrangement (1, 4) according to claim 23 or 26, **characterised by** the electronics (4) being configured to control the pump assembly (1) in the second control mode according to a constant pressure characteristic curve with a flow rate limited by the flow rate characteristic value (Qnenn) or a limit value (G) determined from the characteristic values (Hnenn, Qnenn).

**28.** Arrangement (1, 4) according to claim 24, **characterised by** a certain number (Nv, $N_R$) of consumers or units or a certain area (F) that is to be heated or cooled, or a certain range with numbers or areas, being assigned to each angle adjustment of the actuating means (5), and by this assignment being non-linear over the corresponding angle range ($\alpha$, $\beta$).

**29.** Arrangement (1, 4) according to claim 24 or 28, **characterised by** a scale or an arrangement of symbols or markings being assigned to each angle range ($\alpha$, $\beta$, y), arranged radially alongside the actuating means (5) and extending along its circumference, representing the various numbers (Nv, $N_R$) and/or areas (F).

**30.** Set consisting of an arrangement (1, 4) according to claim 29 and an information carrier, in which the information carrier comprises a table (11) that comprises the assignment of the symbols or markings to the respective number (Nv, $N_R$) and/or area (F).

**Revendications**

**1.** Procédé de réglage du fonctionnement d'une unité de pompage (1) dont la puissance est réglable dans une installation hydraulique d'un bâtiment avec un nombre de consommateurs alimentés par l'unité de pompage en puissance de chauffage ou de refroidissement par la prescription d'une valeur nominale ($N_1$, $N_2$, $N_3$, $F_1$, $F_2$, $F_3$) d'une grandeur de réglage (Nv, NR, F), **caractérisé en ce que** la grandeur de réglage (Nv, $N_R$, F) est le nombre (Nv) des consommateurs ou un nombre ($N_R$) d'une unité dénombrable correspondant à celui-ci, ou la surface (F) à chauffer ou à refroidir du bâtiment, où, à partir de la valeur nominale ($N_1$, $N_2$, $N_3$, $F_1$, $F_2$, $F_3$) de la grandeur de réglage (Nv, $N_R$, F), une valeur caractéristique (Hnenn) pour la hauteur de refoulement (H) et/ou une valeur caractéristique (Qnenn) pour le débit (Q) de l'unité de pompage (1) est déterminée par une électronique (4) associée à l'unité de pompage (1) et l'unité de pompage (1) est commandée en fonction de la valeur caractéristique (Hnenn) pour la hauteur de refoulement (H) ou de la valeur caractéristique ($Q_{nenn}$) pour le débit (Q) ou de ces deux valeurs caractéristiques (Qnenn, Hnenn).

**2.** Procédé selon la revendication 1, **caractérisé en ce que** l'unité dénombrable correspondante est le nombre ($N_R$) de pièces du bâtiment à chauffer ou à refroidir.

**3.** Procédé selon la revendication 1 ou 2, **caractérisé en ce qu'**une plage de valeurs nominales ($N_1$, $N_2$, $N_3$, $F_1$, $F_2$, $F_3$) de la grandeur de réglage (Nv, $N_R$, F) est prédéfinie et qu'une valeur nominale représentative de cette plage est utilisée, par exemple une valeur moyenne de la plage correspondante.

4. Procédé selon la revendication 3, **caractérisé en ce que** la plage est sélectionnée parmi un certain nombre de plages, sachant que les plages sont de taille différente, en particulier devenant plus grandes lorsque le nombre ou la surface augmente.

5. Procédé selon l'une des revendications précédentes, **caractérisé en ce que** la valeur caractéristique (Hnenn) de la hauteur de refoulement (H) est déterminée par l'une des règles de calcul suivantes :

$$H_{nenn} = H_{off} + H_V \cdot N_V,$$

$$H_{nenn} = H_{off} + H_R \cdot N_R,$$

ou

$$H_{nenn} = H_{off} + H_F \cdot F,$$

sachant que

Hnenn est la valeur caractéristique à définir pour le montant de la hauteur de refoulement,
$H_{off}$ est le décalage prédéfini de la hauteur de refoulement,
Hv est le paramètre de hauteur de refoulement prédéfini, exprimant une hauteur de refoulement par consommateur,
Hv est le paramètre de hauteur de refoulement prédéfini, exprimant une hauteur de refoulement par unité, plus particulièrement par pièce,
Hv est le paramètre de hauteur de refoulement prédéfini, exprimant une hauteur de refoulement par unité de surface, plus particulièrement par mètre carré de surface,
Nv est le nombre de consommateurs défini par la valeur nominale,
$N_R$ est le nombre d'unités, en particulier de pièces, défini par la valeur par défaut, et
F est la surface du bâtiment prédéfinie par la valeur nominale.

6. Procédé selon l'une des revendications précédentes, **caractérisé en ce que** la valeur caractéristique (Qnenn) du débit (Q) est déterminée par l'une des règles de calcul suivantes :

$$Q_{nenn} = Q_{off} + Q_V \cdot N_V,$$

$$Q_{nenn} = Q_{off} + Q_R \cdot N_R,$$

ou

$$Q_{nenn} = Q_{off} + Q_F \cdot F,$$

sachant que

Qnenn est la valeur caractéristique à définir pour le montant du débit,
Qoff est le décalage prédéfini du débit,
Qv est le paramètre de débit prédéfini, exprimant un débit par consommateur,
$Q_R$ est le paramètre de débit prédéfini, exprimant un débit par unité, plus particulièrement par pièce,
$H_F$ est le paramètre de débit prédéfini, exprimant un débit par unité de surface, plus particulièrement par mètre carré de surface,
Nv est le nombre de consommateurs défini par la valeur nominale,
$N_R$ est le nombre d'unités, en particulier de pièces, défini par la valeur par défaut, et
F est la surface du bâtiment prédéfinie par la valeur nominale.

7. Procédé selon la revendication 5 ou 6, **caractérisé en ce**

   **que** la définition préalable du décalage de hauteur de refoulement $H_{off}$ est comprise entre 30 et 80 cm, de préférence environ 50 cm, et/ou
   **que** la définition préalable du décalage de débit Qoff est comprise entre 0 et 500 l/h de préférence environ 200 l/h, et/ou
   **que** la prédéfinition du paramètre de hauteur de refoulement $H_v$, $H_R$, $H_F$ est comprise entre 2 et 10 cm, de préférence environ 5 cm par consommateur ou unité, ou entre 0,1 et 0,6 cm, de préférence environ 0,3 cm par mètre carré de surface, et/ou
   **que** la prédéfinition du paramètre de débit Qv, $Q_R$, $Q_F$ est comprise entre 30 et 50 l/h, de préférence environ 40 l/h par consommateur ou unité, ou entre 1 et 8 l/h, de préférence dans la plage de 3 à 4 l/h par mètre carré de surface.

8. Procédé selon l'une des revendications précédentes, **caractérisé en ce que** l'électronique attend, avant ou après la valeur nominale de la surface (F) comme grandeur de réglage (Nv, $N_R$, F), une saisie indiquant si l'installation hydraulique est un système de chauffage ou de refroidissement de surface et servant à fixer la ou une valeur caractéristique (Hnenn) pour la hauteur de refoulement (H) et/ou la valeur caractéristique (Qnenn) pour le débit (Q).

9. Procédé selon la revendication 8, **caractérisé en ce que,** lorsque l'entrée indique que l'installation hydraulique est un système de chauffage ou de refroidissement de surface, une valeur caractéristique ($H_{nenn}$) pour la hauteur de refoulement (H) et une valeur caractéristique ($Q_{nenn}$) pour le débit (Q) sont déterminées par :

$$H_{nenn} = H_{const,}$$

$$Q_{nenn} = Q_{off} + Q_F \cdot F,$$

   sachant que

   Hnenn est la valeur caractéristique à définir pour le montant de la hauteur de refoulement,
   $H_{const}$ est une constante dans la plage 1,0 à 3 m, de préférence environ 2 m,
   Qnenn est la valeur caractéristique à définir pour le montant du débit,
   Qoff est un décalage de débit dans la plage 0 à 500 l/h, de préférence environ 200 l/h,
   $Q_F$ est un paramètre de débit dans la plage $1 l/(h \cdot m^2)$ à $8 l/(h \cdot m^2)$, de préférence environ $4\ l/(h \cdot m^2)$, et
   F est la surface du bâtiment prédéfinie par la valeur nominale.

10. Procédé selon la revendication 8 ou 98, **caractérisé en ce que,** lorsque l'entrée indique que l'installation hydraulique n'est pas un système de chauffage ou de refroidissement de surface, la valeur caractéristique ($H_{nenn}$) pour la hauteur de refoulement (H) et la valeur caractéristique ($Q_{nenn}$) pour le débit (Q) sont déterminées par :

$$H_{nenn} = H_{off} + H_F \cdot F,$$

$$Q_{nenn} = Q_{off} + Q_F \cdot F,$$

   sachant que

   Hnenn est la valeur caractéristique à définir pour le montant de la hauteur de refoulement,
   $H_{off}$ est en décalage de hauteur de refoulement dans la plage 30 à 80 cm, de préférence environ 50 cm,
   $H_F$ est un paramètre de hauteur de refoulement dans la plage 1,0 à 0,6 $cm/m^2$, de préférence environ 0,3 $cm/m^2$,
   Qnenn est la valeur caractéristique à définir pour le montant du débit,
   Qoff est un décalage de débit dans la plage 0 à 500 l/h, de préférence environ 100 l/h,
   $Q_F$ est un paramètre de débit dans la plage 1 $l/(h \cdot m^2)$ à 5 $l/(h \cdot m^2)$, de préférence environ 3 $l/(h \cdot m^2)$, et
   F est la surface du bâtiment prédéfinie par la valeur nominale.

11. Procédé selon la revendication 8, 9 ou 10, **caractérisé en ce que** l'unité de pompage est régulée selon un premier type de régulation lorsque l'entrée indique que l'installation hydraulique n'est pas un système de chauffage ou de refroidissement de surface, et selon un second type de régulation lorsque l'entrée indique que l'installation hydraulique est un système de chauffage ou de refroidissement de surface.

**12.** Procédé selon l'une des revendications 1 à 7, **caractérisé en ce que** l'unité de pompage est régulée selon un premier type de régulation lorsque le nombre ($N_V$, $N_R$) de consommateurs ou d'unités correspondantes à ceux-ci est prédéfini comme grandeur de réglage (Nv, $N_R$, F), et selon un second type de régulation lorsque la surface (F) à chauffer ou à refroidir est prédéfinie comme grandeur de réglage (Nv, $N_R$, F).

**13.** Procédé selon la revendication 11 ou 12, **caractérisé en ce que** le premier type de régulation est une régulation à pression proportionnelle.

**14.** Procédé selon l'une des revendications 11 à 13, **caractérisé en ce que** les deux valeurs caractéristiques (Hnenn, Qnenn) servent à définir une caractéristique de régulation (R) selon laquelle l'unité de pompage est régulée selon le premier type de régulation.

**15.** Procédé selon l'une des revendications 11 à 14, **caractérisé en ce que** le second type de régulation est une régulation à pression constante.

**16.** Procédé selon la revendication 15, **caractérisé en ce que** seule la valeur caractéristique (Hnenn) sert à définir une caractéristique de régulation (R) pour la hauteur de refoulement selon laquelle l'unité de pompage est régulée selon le second type de régulation.

**17.** Procédé selon la revendication 14 ou 16, **caractérisé en ce qu'**un point de fonctionnement (B) défini à partir des deux valeurs caractéristiques (Hnenn, Qnenn) se trouve sur la courbe de régulation (R).

**18.** Procédé selon l'une des revendications précédentes, **caractérisé en ce que,** dans le premier ou le second type de régulation, au moins l'une des deux valeurs caractéristiques (Hnenn, Qnenn) forme une valeur limite ou au moins une valeur limite est déterminée à partir d'au moins l'une des deux valeurs caractéristiques (Hnenn, Qnenn), et l'unité de pompage fonctionne de telle manière que la valeur limite n'est pas dépassée.

**19.** Procédé selon l'une des revendications précédentes, **caractérisé en ce que** l'unité de pompage peut fonctionner selon un type de régulation dans lequel sa puissance hydraulique est automatiquement adaptée aux besoins de l'installation, sachant que lorsque ce type de régulation est sélectionné, au moins l'une des deux valeurs caractéristiques (Hnenn, Qnenn) forme une valeur limite ou au moins une valeur limite est déterminée à partir d'au moins l'une des deux valeurs caractéristiques (Hnenn, Qnenn), et l'unité de pompage fonctionne de telle manière que la valeur limite n'est pas dépassée.

**20.** Procédé selon la revendication 16 ou 17, **caractérisé en ce qu'**une valeur limite définie à partir de deux valeurs caractéristiques (Hnenn, Qnenn) est un régime limite.

**21.** Procédé selon l'une des revendications 5, 6, 8 ou 10, **caractérisé en ce que** le décalage de hauteur de refoulement $H_{off}$, le décalage de débit $Q_{off}$, le paramètre de hauteur de refoulement $H_v$, $H_R$, $H_F$ et/ou le paramètre de débit $Q_v$, $Q_R$, $Q_F$ sont paramétrables dans l'électronique.

**22.** Dispositif (1, 4) d'une unité de pompage (1) à puissance réglable, en particulier d'une unité de pompage centrifuge, pour une installation hydraulique d'un bâtiment avec un certain nombre de consommateurs à alimenter en puissance de chauffage ou de refroidissement par l'unité de pompage (1), et d'une électronique (4) associée à l'unité de pompage (1), avec laquelle un réglage de fonctionnement de l'unité de pompage (1) peut être effectué de manière indirecte en définissant la valeur prédéfinie ($N_1$, $N_2$, $N_3$, $F_1$, $F_2$, $F_3$) d'une grandeur de réglage (Nv, $N_R$, F), **caractérisé en ce que** la grandeur de réglage (Nv, $N_R$, F) est le nombre (Nv) de consommateurs ou un nombre ($N_R$) d'une unité dénombrable correspondant à celui-ci, ou la surface (F) à chauffer ou à refroidir du bâtiment, et **en ce que** l'ensemble est agencé pour implémenter le procédé selon au moins l'une des revendications 1 à 21.

**23.** Dispositif (1, 4) selon la revendication 22, **caractérisé en ce que** l'électronique (4) est conçue pour faire fonctionner l'unité de pompage (1) selon un premier type de régulation (7a) lorsque le nombre (Nv, $N_R$) est prédéfini et/ou selon un second type de régulation (7a) lorsque la surface (F) est prédéfinie.

**24.** Dispositif (1, 4) selon la revendication 22 ou 23, **caractérisé en ce que** l'électronique (4) présente un moyen d'actionnement (5) rotatif, au moyen duquel la puissance peut être prédéfinie dans une première plage angulaire (a) à l'aide du nombre (Nv, $N_R$) et dans une seconde plage angulaire (y) à l'aide de la surface (F).

**25.** Dispositif (1, 4) selon l'une des revendications 22 à 24, **caractérisé en ce que** l'électronique (4) présente un dispositif de commutation permettant, pour le réglage de la puissance, de commuter entre une prédéfinition du nombre (Nv, $N_R$) et une prédéfinition directe d'une hauteur de refoulement (H) dépendant du débit et/ou de commuter entre la prédéfinition de la surface (F) et une prédéfinition directe d'une hauteur de refoulement constante (H).

**26.** Dispositif (1, 4) selon la revendication 23, **caractérisé en ce que** l'électronique (4) est configurée pour réguler l'unité de pompage (1) selon le premier type de régulation selon une caractéristique de pression proportionnelle (R) définie à partir des valeurs caractéristiques (Hnenn, Qnenn), en particulier limitée par au moins l'une des valeurs caractéristiques ($H_{nenn}$, Qnenn) ou une valeur limite déterminée à partir de celles-ci.

**27.** Dispositif (1, 4) selon la revendication 23 ou 26, **caractérisé en ce que** l'électronique (4) est configurée pour réguler l'unité de pompage (1) selon le second type de régulation selon une courbe caractéristique de pression constante limitée par le débit ($Q_{nenn}$) ou par une valeur limite (G) déterminée à partir des valeurs caractéristiques (Hnenn, Qnenn).

**28.** Dispositif (1, 4) selon la revendication 24, **caractérisé en ce que** chaque réglage angulaire du moyen d'actionnement (5) est associé à un nombre déterminé (Nv, $N_R$) de consommateurs ou d'unités ou une surface déterminée (F) à chauffer ou à refroidir, ou une zone déterminée avec des nombres ou des surfaces, et **en ce que** cette association est non linéaire sur la plage angulaire correspondante ($\alpha$, $\beta$).

**29.** Dispositif (1, 4) selon la revendication 24 ou 28, **caractérisé en ce que** chaque zone angulaire ($\alpha$, $\beta$, $\gamma$) est associée à une échelle disposée radialement à côté du moyen d'actionnement (5) et s'étendant le long de sa circonférence, ou un agencement de symboles ou de marques représentant différents nombres (Nv, $N_R$) et/ou surfaces (F).

**30.** Ensemble constitué d'un dispositif (1, 4) selon la revendication 29 et d'un support d'informations comprenant un tableau (11) présentant l'association des symboles ou des marquages au nombre (Nv, $N_R$) et/ou à la surface (F) respectifs.

Fig. 2

Fig. 1

11

| | • | • | • | |
|---|---|---|---|---|
| 7a | 10x | 20x | 30x | → 9 |
| 7b | 90m² | 130m² | 190m² | → 10 |

Fig. 3

Fig. 4a

Fig. 4b

Fig. 4c

EP 3 366 925 B1

**Fig. 5**

**Fig. 6**

EP 3 366 925 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1199530 B1
- DE 3315828 A1
- US 20150108230 A
- DE 102016004458